# EUROPEAN PATENT APPLICATION

(11) **EP 4 838 915 A1**
(43) Date of publication of application: **11.11.2026**
(21) Application number: 24923401.4
(22) Date of filing: 24.10.2024
(51) Int. Cl.: H04W 8/00, H04W 76/10

(54) **INFORMATION TRANSMISSION METHOD, COMMUNICATION DEVICE, AND STORAGE MEDIUM**

(30) Priority: 08.02.2024 CN 202410178207; 05.08.2024 CN 202411075503
(71) Applicant: Huawei Technologies Co., Ltd., Shenzhen, Guangdong 518129 (CN)
(72) Inventor: ZHANG, Chenyu, Shenzhen, Guangdong 518129 (CN); XU, Shengfeng, Shenzhen, Guangdong 518129 (CN)
(74) Representative: Maiwald GmbH
(86) International application number: PCT/CN2024/127059
(87) International publication number: WO 2025/167197

(57) **Abstract**

This application relates to the communication field and provides an information transmission method, a communication apparatus, and a storage medium, which can ensure that service requirements between terminals are met as much as possible. The method includes: determining a first hop count, and sending a first discovery message, where the first hop count is a maximum hop number for transmitting discovery information, the discovery information is used by a source terminal to discover a target terminal, the first discovery message includes the first hop count and the discovery information, the first hop count is related to information about a first service of the source terminal, and the information about the first service includes at least one of the following: a quality of service parameter corresponding to the first service, a relay service type corresponding to the first service, a type of the first service, or a hop count requirement of the first service.

## Description

This application claims priorities to Chinese Patent Application No. 202410178207.1, filed with the China National Intellectual Property Administration on February 8, 2024 and entitled "INFORMATION TRANSMISSION METHOD, COMMUNICATION APPARATUS, AND STORAGE MEDIUM", and to Chinese Patent Application No. 202411075503.5, filed with the China National Intellectual Property Administration on August 5, 2024 and entitled "INFORMATION TRANSMISSION METHOD, COMMUNICATION APPARATUS, AND STORAGE MEDIUM", both of which are incorporated herein by reference in their entireties.

### TECHNICAL FIELD

This application relates to the communication field, and specifically, to an information transmission method, a communication apparatus, and a storage medium.

### BACKGROUND

In communication systems supporting proximity service (proximity service, ProSe), a terminal may determine a plurality of relay terminals through a discovery process, and is connected to other terminals through the plurality of relay terminals. However, in the discovery process, it is necessary to limit a hop count for transmitting discovery information, to avoid endless transmission of the discovery information. However, currently, a value used to limit the hop count for transmitting the discovery information is preconfigured. In this case, it is likely that the value used to limit the hop count for transmitting the discovery information is not applicable to actual situations, and consequently, service requirements between terminals may not be met.

### SUMMARY

To resolve the foregoing technical problem, embodiments of this application provide an information transmission method, a communication apparatus, and a storage medium, to ensure that service requirements between terminals are met as much as possible.

According to a first aspect, an information transmission method is provided. The method may be performed by a source terminal, may be performed by a component of the source terminal, for example, a processor, a chip, or a chip system of the source terminal, or may be implemented by a logical module or software that can implement all or a part of functions of the source terminal. An example in which the method is performed by the source terminal is used below for description. The information transmission method includes: determining a first hop count based on information about a first service, and sending a first discovery message, where the first hop count is a maximum hop number for transmitting discovery information, the discovery information is used by the source terminal to discover a target terminal, the first discovery message includes the first hop count and the discovery information, and the information about the first service includes at least one of the following: a quality of service parameter corresponding to the first service, a relay service type corresponding to the first service, a type of the first service, or a hop count requirement of the first service.

In embodiments of this application, the source terminal may determine the maximum hop number (namely, the first hop count) for transmitting the discovery information, and send the first discovery message including the first hop count and the discovery information. In this way, another terminal can learn of the first hop count when receiving the discovery information, so that the source terminal can limit, based on the first hop count in a discovery process, a hop count for transmitting the discovery information. Because the quality of service parameter corresponding to the first service, the relay service type corresponding to the first service, the type of the first service, and the hop count requirement of the first service that are included in the information about the first service are all parameters related to service requirements, and the first hop count is related to at least one of the quality of service parameter corresponding to the first service, the relay service type corresponding to the first service, the type of the first service, or the hop count requirement of the first service, the first hop count can better meet an actual requirement of the service, so that it can be ensured as much as possible that service requirements between terminals are met.

With reference to the first aspect, in a possible implementation, the determining the first hop count based on the information about the first service includes: determining the first hop count based on the quality of service parameter corresponding to the first service. Because the quality of service parameter corresponding to the first service can accurately reflect a parameter related to the service requirement, the first hop count determined based on the quality of service parameter corresponding to the first service can meet the actual requirement of the service as much as possible, thereby ensuring that the service requirement between the terminals is met as much as possible.

With reference to the first aspect, in a possible implementation, the sending the first discovery message includes: when the first hop count is different from a maximum hop number determined based on the relay service type corresponding to the first service, generating and sending the first discovery message.

With reference to the foregoing related descriptions of the "first hop count", it can be learned that the first hop count determined based on the quality of service parameter corresponding to the first service can meet the actual requirement of the service as much as possible, thereby ensuring that the service requirement between the terminals is met as much as possible. In view of this, when the first hop count determined based on the quality of service parameter corresponding to the first service is different from the maximum hop number determined based on the relay service type corresponding to the first service, the first discovery message is generated and sent, that is, the first hop count is further simultaneously sent when the discovery information is sent, so that a terminal that receives the first discovery message can obtain the first hop count that can better meet the actual requirement of the service, thereby further ensuring that the service requirement between the terminals is met.

With reference to the first aspect, in a possible implementation, the method provided in embodiments of this application further includes: when the first hop count is the same as the maximum hop number determined based on the relay service type corresponding to the first service, generating and sending an eleventh discovery message, where the eleventh discovery message includes the discovery information, and the eleventh discovery message does not include the first hop count.

In other words, because the maximum hop number determined based on the relay service type corresponding to the first service is well known to each terminal related to the first service, when the first hop count is the same as the maximum hop number determined based on the relay service type corresponding to the first service, each terminal related to the first service does not need to learn of the first hop count based on the first hop count sent by the source terminal. In this way, the source terminal does not need to send the first hop count when sending the discovery information, that is, the source terminal may send the eleventh discovery message, where the eleventh discovery message includes the discovery information, and the eleventh discovery message does not include the first hop count. In this way, signaling overhead can be reduced while it is ensured that the service requirement between the terminals is met.

With reference to the first aspect, in a possible implementation, the method provided in embodiments of this application further includes: receiving first indication information from a policy control function network element, where the first indication information indicates a correspondence between at least one maximum hop number and at least one of at least one quality of service parameter, at least one relay service type, a type of at least one service, or a hop count requirement of the at least one service; and the at least one quality of service parameter includes the quality of service parameter corresponding to the first service, the at least one relay service type includes the relay service type corresponding to the first service, the type of the at least one service includes the type of the first service, and the hop count requirement of the at least one service includes the hop count requirement of the first service. The determining the first hop count based on the information about the first service includes: determining, based on the first indication information, a maximum hop number corresponding to the information about the first service as the first hop count.

In other words, the source terminal may directly and simply determine the first hop count based on a correspondence between at least one piece of information (for example, a quality of service parameter and/or a relay service type and/or a type of a service and/or a hop count requirement of the service) related to a service requirement and a maximum hop number. This reduces complexity of determining the first hop count by the source terminal, and further improves efficiency of determining the first hop count by the source terminal.

With reference to the first aspect, in a possible implementation, the determining the first hop count based on the information about the first service includes: determining the first hop count based on the quality of service parameter corresponding to the first service and a first quality of service parameter, where the first quality of service parameter is a quality of service parameter corresponding to a proximity communication PC5 connection.

In other words, in this implementation, the source terminal may determine the first hop count based on the quality of service parameter corresponding to the first service and the first quality of service parameter. In this way, accuracy of the first hop count determined based on an actual quality of service parameter is higher, and subsequently, it can be better ensured that service requirements between terminals are met.

With reference to the first aspect, in a possible implementation, the target terminal is a relay terminal connected to a network, and the determining the first hop count based on the information about the first service includes: determining the first hop count based on the quality of service parameter corresponding to the first service and first information, where the first information includes a first quality of service parameter and/or a second quality of service parameter, the first quality of service parameter is a quality of service parameter corresponding to a proximity communication PC5 connection, and the second quality of service parameter is a quality of service parameter corresponding to a connection between the target terminal and a network device.

However, when the target terminal is a relay terminal connected to the network, connections exist not only between the terminals but also between the terminal and the network. Therefore, in this scenario, in addition to improving the accuracy of the first hop count based on the actual quality of service parameter, the source terminal may further adaptively determine, based on the current scenario, the first quality of service parameter and/or the second quality of service parameter as the quality of service parameter needed for the first hop count, so that the first hop count determined based on the quality of service parameter can better meet an actual situation of the current scenario, thereby further improving the accuracy of the first hop count.

With reference to the first aspect, in a possible implementation, the information about the first service includes the quality of service parameter corresponding to the first service and/or the hop count requirement of the first service, and the determining the first hop count based on the information about the first service includes: A proximity service layer ProSe layer of the source terminal receives the quality of service parameter corresponding to the first service and/or the hop count requirement of the first service from an application layer of the source terminal, and determines the first hop count based on the quality of service parameter corresponding to the first service and/or the hop count requirement of the first service.

In other words, when the information about the first service includes the quality of service parameter corresponding to the first service and/or the hop count requirement of the first service, the ProSe layer of the source terminal may obtain the quality of service parameter corresponding to the first service and/or the hop count requirement of the first service from the application layer of the source terminal, and determine the first hop count based on the quality of service parameter corresponding to the first service and/or the hop count requirement of the first service. This provides a specific implementation of determining the first hop count inside the source terminal, and this specific implementation can effectively support implementation of effect implemented in corresponding preceding steps.

With reference to the first aspect, in a possible implementation, the method provided in embodiments of this application further includes: The ProSe layer of the source terminal obtains a quality of service requirement corresponding to the first service from the application layer of the source terminal, and determines, based on the quality of service requirement corresponding to the first service, the quality of service parameter corresponding to the first service. This can provide a data basis for subsequently determining the first hop count.

With reference to the first aspect, in a possible implementation, the method provided in embodiments of this application further includes: The ProSe layer of the source terminal obtains the type of the first service from the application layer of the source terminal, and determines, based on the type of the first service, the quality of service parameter corresponding to the first service. This can provide a data basis for subsequently determining the first hop count.

With reference to the first aspect, in a possible implementation, the method provided in embodiments of this application further includes: The ProSe layer of the source terminal determines, based on the type of the first service and policy information configured on the source terminal, the relay service type corresponding to the first service. This can provide a data basis for subsequently determining the first hop count.

With reference to the first aspect, in a possible implementation, the method provided in embodiments of this application further includes: When the source terminal determines that there is already a PC5 quality of service flow that can match a data packet or a request of the first service from the application layer of the source terminal, the source terminal determines, based on a quality of service parameter corresponding to the existing PC5 quality of service flow, the quality of service parameter corresponding to the first service. This can provide a data basis for subsequently determining the first hop count.

With reference to the first aspect, in a possible implementation, the method provided in embodiments of this application further includes: When the source terminal determines that there is no PC5 quality of service flow that can match the data packet or the request of the first service from the application layer of the source terminal, the source terminal determines, based on the quality of service requirement corresponding to the first service, the quality of service parameter corresponding to the first service; or the source terminal determines, based on the type of the first service, the quality of service parameter corresponding to the first service. This can provide a data basis for subsequently determining the first hop count.

With reference to the first aspect, in a possible implementation, before the sending the first discovery message, the method provided in embodiments of this application further includes: determining, based on whether there is a connection between the source terminal and the target terminal and/or second information, that the first discovery message needs to be sent, where the second information includes a hop count for a connection between the source terminal and the target terminal and the first hop count. In this way, it may be determined in advance whether the first discovery message needs to be sent, so that the source terminal can send the first discovery message in an appropriate case, to avoid redundant signaling overhead.

With reference to the first aspect, in a possible implementation, the determining, based on whether there is the connection between the source terminal and the target terminal and/or the second information, that the first discovery message needs to be sent includes: when there is no connection between the source terminal and the target terminal, determining that the first discovery message needs to be sent. In other words, only when the source terminal cannot communicate with the target terminal currently, the source terminal needs to send the first discovery message to discover the target terminal, so that the first discovery message is not repeatedly sent when the source terminal can communicate with the target terminal, thereby avoiding redundant signaling overhead.

Alternatively, when there is the connection between the source terminal and the target terminal, and the hop count for the connection between the source terminal and the target terminal is greater than the first hop count, it is determined that the first discovery message needs to be sent. In other words, although there is the connection between the source terminal and the target terminal, the connection cannot meet a service requirement. This indicates that communication cannot be performed between the source terminal and the target terminal currently. In this case, the source terminal also needs to send the first discovery message to discover the target terminal, so that the first discovery message is not repeatedly sent when the source terminal can communicate with the target terminal, thereby avoiding redundant signaling overhead.

According to a second aspect, an information transmission method is provided. The method may be performed by a second relay terminal, may be performed by a component of the second relay terminal, for example, a processor, a chip, or a chip system of the second relay terminal, or may be implemented by a logical module or software that can implement all or a part of functions of the second relay terminal, where the second relay terminal is a relay terminal that is not directly connected to a network. An example in which the method is performed by the second relay terminal is used below for description. The information transmission method includes: obtaining a second hop count, and sending a second discovery message, where the second hop count is a maximum hop number for transmitting discovery information after the second relay terminal receives the discovery information, the discovery information is used by a source terminal to discover a target terminal, the second discovery message includes the second hop count and the discovery information, and the second hop count is related to a relay service type corresponding to a first service of the source terminal.

In embodiments of this application, the second relay terminal may determine the maximum hop number (namely, the second hop count) for transmitting the discovery information after the second relay terminal receives the discovery information, and send the second discovery message including the second hop count and the discovery information. In this way, when receiving the discovery information, another terminal can learn of the second hop count, so that the second relay terminal can limit, based on the second hop count in a discovery process, a hop count for transmitting the discovery information after the second relay terminal receives the discovery information. Because the relay service type corresponding to the first service included in information about the first service is a parameter related to service requirements, and the second hop count is related to the relay service type corresponding to the first service, the second hop count can better meet an actual requirement of the service, so that it can be ensured as much as possible that service requirements between terminals are met.

With reference to the second aspect, in a possible implementation, the obtaining the second hop count includes: receiving fourth indication information, where the fourth indication information indicates the second hop count. In this way, the second relay terminal can directly learn of the second hop count by using the fourth indication information, thereby reducing calculation burden of determining the second hop count by the second relay terminal.

With reference to the second aspect, in a possible implementation, the obtaining the second hop count includes: obtaining a first hop count and a third hop count, and determining the second hop count based on the first hop count and the third hop count, where the first hop count is a maximum hop number for transmitting the discovery information, the first hop count is related to the relay service type corresponding to the first service, and the third hop count is a hop count for a connection between the second relay terminal and the target terminal.

In other words, in addition to directly obtaining the second hop count, the second relay terminal may further determine the second hop count based on the entire end-to-end maximum hop number (namely, the first hop count) from the source terminal to the target terminal and the hop count (namely, the third hop count) for the connection between the second relay terminal and the target terminal. In this way, when another terminal cannot provide the second hop count for the second relay terminal, the second relay terminal can also determine the second hop count based on the first hop count and the third hop count. In other words, another implementation of determining the second hop count is provided, so that reliability of determining the second hop count by the second relay terminal is improved.

With reference to the second aspect, in a possible implementation, the obtaining the first hop count includes: receiving second indication information, where the second indication information indicates the first hop count. In this way, the second relay terminal can directly learn of the first hop count by using the second indication information, thereby reducing calculation burden of determining the first hop count by the second relay terminal.

With reference to the second aspect, in a possible implementation, the method provided in embodiments of this application further includes: receiving third indication information from a policy control function network element, where the third indication information indicates a correspondence between at least one maximum hop number and at least one relay service type, and the at least one relay service type includes the relay service type corresponding to the first service; and the obtaining the first hop count includes: determining, based on the third indication information, a maximum hop number corresponding to the relay service type of the first service as the first hop count.

In other words, the second relay terminal may directly and simply determine the first hop count based on a correspondence between information (for example, the relay service type) related to service requirements and a maximum hop number. This reduces complexity of determining the first hop count by the second relay terminal, and further improves efficiency of determining the first hop count by the second relay terminal.

According to a third aspect, an information transmission method is provided. The method may be performed by a first relay terminal, may be performed by a component of the first relay terminal, for example, a processor, a chip, or a chip system of the first relay terminal, or may be implemented by a logical module or software that can implement all or a part of functions of the first relay terminal, where the first relay terminal is a relay terminal that is connected to a network. An example in which the method is performed by the first relay terminal is used below for description. The information transmission method includes: obtaining a first hop count, and sending a third discovery message, where the first hop count is a maximum hop number for transmitting discovery information, the discovery information is used by a source terminal to discover a first relay terminal, the third discovery message includes the first hop count and the discovery information, and the first hop count is related to a relay service type corresponding to a first service of the source terminal.

In embodiments of this application, the first relay terminal may determine the maximum hop number (namely, the first hop count) for transmitting the discovery information, and send the third discovery message including the first hop count and the discovery information. In this way, another terminal can learn of the first hop count when receiving the discovery information, so that the first relay terminal can limit, based on the first hop count in a discovery process, a hop count for transmitting the discovery information. Because the relay service type corresponding to the first service included in information about the first service is a parameter related to service requirements, and the first hop count is related to the relay service type corresponding to the first service, the first hop count can better meet an actual requirement of the service, so that it can be ensured as much as possible that service requirements between terminals are met.

With reference to the third aspect, in a possible implementation, the method provided in embodiments of this application further includes: receiving third indication information from a policy control function network element, where the third indication information indicates a correspondence between at least one maximum hop number and at least one relay service type, and the at least one relay service type includes the relay service type corresponding to the first service; and the obtaining the first hop count includes: determining, based on the third indication information, a maximum hop number corresponding to the relay service type corresponding to the first service as the first hop count.

In other words, the first relay terminal may directly and simply determine the first hop count based on a correspondence between information (for example, the relay service type) related to service requirements and a maximum hop number. This reduces complexity of determining the first hop count by the first relay terminal, and further improves efficiency of determining the first hop count by the first relay terminal.

According to a fourth aspect, an information transmission method is provided. The method may be performed by a second relay terminal, may be performed by a component of the second relay terminal, for example, a processor, a chip, or a chip system of the second relay terminal, or may be implemented by a logical module or software that can implement all or a part of functions of the second relay terminal, where the second relay terminal is a relay terminal that is not directly connected to a network. An example in which the method is performed by the second relay terminal is used below for description. The information transmission method includes: receiving a twelfth discovery message, and determining a first hop count based on a first relay service type, where the twelfth discovery message includes discovery information and the first relay service type, the discovery information is used by a source terminal to discover a target terminal, and the first hop count is a maximum hop number for transmitting the discovery information; and sending the discovery information or skipping sending the discovery information based on the first hop count.

In embodiments of this application, the second relay terminal may determine, based on the first relay service type included in the discovery message, the maximum hop number (namely, the first hop count) for transmitting the discovery information, and send the discovery information or skip sending the discovery information based on the first hop count. Because the first hop count is related to a relay service type corresponding to a first service of the source terminal, the first hop count can better meet an actual requirement of the service. In this way, reasonableness of a hop count for transmitting the discovery information can be ensured as much as possible, that is, redundant transmission of the discovery information or missing transmission of the discovery information is avoided as much as possible.

With reference to the fourth aspect, in a possible implementation, the method provided in embodiments of this application further includes: receiving a correspondence between at least one maximum hop number and at least one relay service type from a policy control function network element, where the at least one relay service type includes the first relay service type; and the determining the first hop count based on the first relay service type includes: determining the first hop count based on the correspondence and the first relay service type.

According to a fifth aspect, a communication apparatus is provided, to implement the foregoing methods. The communication apparatus may be the source terminal in any one of the first aspect or the implementations of the first aspect, or an apparatus including the source terminal, or an apparatus, for example, a chip, included in the source terminal. Alternatively, the communication apparatus may be the second relay terminal in any one of the second aspect or the implementations of the second aspect, or an apparatus including the second relay terminal, or an apparatus, for example, a chip, included in the second relay terminal. Alternatively, the communication apparatus may be the first relay terminal in any one of the third aspect or the implementations of the third aspect, or an apparatus including the first relay terminal, or an apparatus, for example, a chip, included in the first relay terminal. Alternatively, the communication apparatus may be the second relay terminal in any one of the fourth aspect or the implementations of the fourth aspect, or an apparatus including the second relay terminal, or an apparatus, for example, a chip, included in the second relay terminal. The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a sixth aspect, a communication apparatus is provided, including a processor and a memory. The memory is configured to store computer instructions. When the processor executes the instructions, the communication apparatus is caused to perform the method in any one of the foregoing aspects. The communication apparatus may be the source terminal in any one of the first aspect or the implementations of the first aspect, or an apparatus including the source terminal, or an apparatus, for example, a chip, included in the source terminal. Alternatively, the communication apparatus may be the second relay terminal in any one of the second aspect or the implementations of the second aspect, or an apparatus including the second relay terminal, or an apparatus, for example, a chip, included in the second relay terminal. Alternatively, the communication apparatus may be the first relay terminal in any one of the third aspect or the implementations of the third aspect, or an apparatus including the first relay terminal, or an apparatus, for example, a chip, included in the first relay terminal. Alternatively, the communication apparatus may be the second relay terminal in any one of the fourth aspect or the implementations of the fourth aspect, or an apparatus including the second relay terminal, or an apparatus, for example, a chip, included in the second relay terminal.

According to a seventh aspect, a communication apparatus is provided, including a processor and a communication interface. The communication interface is configured to communicate with a module other than the communication apparatus. The processor is configured to execute a computer program or instructions, to cause the communication apparatus to perform the method in any one of the foregoing aspects. The communication apparatus may be the source terminal in any one of the first aspect or the implementations of the first aspect, or an apparatus including the source terminal, or an apparatus, for example, a chip, included in the source terminal. Alternatively, the communication apparatus may be the second relay terminal in any one of the second aspect or the implementations of the second aspect, or an apparatus including the second relay terminal, or an apparatus, for example, a chip, included in the second relay terminal. Alternatively, the communication apparatus may be the first relay terminal in any one of the third aspect or the implementations of the third aspect, or an apparatus including the first relay terminal, or an apparatus, for example, a chip, included in the first relay terminal. Alternatively, the communication apparatus may be the second relay terminal in any one of the fourth aspect or the implementations of the fourth aspect, or an apparatus including the second relay terminal, or an apparatus, for example, a chip, included in the second relay terminal.

According to an eighth aspect, a communication apparatus is provided, including at least one processor. The processor is configured to execute a computer program or instructions stored in a memory, to cause the communication apparatus to perform the method in any one of the foregoing aspects. The memory may be coupled to the processor, or may be independent of the processor. The communication apparatus may be the source terminal in any one of the first aspect or the implementations of the first aspect, or an apparatus including the source terminal, or an apparatus, for example, a chip, included in the source terminal. Alternatively, the communication apparatus may be the second relay terminal in any one of the second aspect or the implementations of the second aspect, or an apparatus including the second relay terminal, or an apparatus, for example, a chip, included in the second relay terminal. Alternatively, the communication apparatus may be the first relay terminal in any one of the third aspect or the implementations of the third aspect, or an apparatus including the first relay terminal, or an apparatus, for example, a chip, included in the first relay terminal. Alternatively, the communication apparatus may be the second relay terminal in any one of the fourth aspect or the implementations of the fourth aspect, or an apparatus including the second relay terminal, or an apparatus, for example, a chip, included in the second relay terminal.

According to a ninth aspect, a computer-readable storage medium is provided. The computer-readable storage medium stores a computer program or instructions. When the computer program or the instructions are run on a communication apparatus, the communication apparatus is caused to perform the method in any one of the foregoing aspects or the implementations of the foregoing aspects.

According to a tenth aspect, a computer program product including instructions is provided. When the computer program product is run on a communication apparatus, the communication apparatus is caused to perform the method in any one of the foregoing aspects or the implementations of the foregoing aspects.

According to an eleventh aspect, a communication apparatus (for example, the communication apparatus may be a chip or a chip system) is provided. The communication apparatus includes a processor, configured to implement a function in any one of the foregoing aspects or the implementations of the foregoing aspects.

In some possible designs, the communication apparatus includes a memory, and the memory is configured to store necessary program instructions and data.

In some possible designs, when the apparatus is a chip system, the apparatus may include a chip, or may include the chip and another discrete component.

It may be understood that when the communication apparatus provided in any one of the foregoing aspects is a chip, the sending action/function may be understood as output, and the receiving action/function may be understood as input.

According to a twelfth aspect, an information transmission method is provided. The information transmission method includes the method according to any one of the first aspect or the implementations of the first aspect, the method according to any one of the second aspect or the implementations of the second aspect, and the method according to any one of the third aspect or the implementations of the third aspect.

According to a thirteenth aspect, a communication system is provided. The communication system includes the source terminal in the foregoing aspects, the second relay terminal in the foregoing aspects, and the first relay terminal in the foregoing aspects.

For technical effects brought by any implementation of the fifth aspect to the thirteenth aspect, refer to the technical effects brought by the corresponding implementations of the first aspect to the fourth aspect. Details are not described herein again.

It should be noted that various possible implementations of any one of the foregoing aspects may be combined provided that the solutions are not contradictory.

### BRIEF DESCRIPTION OF DRAWINGS

FIG. 1 is a diagram of a relay-based ProSe communication architecture according to an embodiment of this application;
FIG. 2 is a diagram of another relay-based ProSe communication architecture according to an embodiment of this application;
FIG. 3 is a schematic flowchart of a discovery process according to an embodiment of this application;
FIG. 4 is a schematic flowchart of another discovery process according to an embodiment of this application;
FIG. 5 is a schematic flowchart of another discovery process according to an embodiment of this application;
FIG. 6 is a diagram of a structure of a communication system according to an embodiment of this application;
FIG. 7 is a diagram of a structure of a communication apparatus according to an embodiment of this application;
FIG. 8 is a schematic flowchart of an information transmission method according to an embodiment of this application;
FIG. 9 is a schematic flowchart of another information transmission method according to an embodiment of this application;
FIG. 10 is a schematic flowchart of another information transmission method according to an embodiment of this application;
FIG. 11 is a schematic flowchart of another information transmission method according to an embodiment of this application;
FIG. 12 is a schematic flowchart of another information transmission method according to an embodiment of this application;
FIG. 13 is a schematic flowchart of another information transmission method according to an embodiment of this application;
FIG. 14 is a schematic flowchart of another information transmission method according to an embodiment of this application;
FIG. 15 is a schematic flowchart of another information transmission method according to an embodiment of this application;
FIG. 16 is a schematic flowchart of another information transmission method according to an embodiment of this application;
FIG. 17 is a schematic flowchart of another information transmission method according to an embodiment of this application; and
FIG. 18 is a diagram of a structure of another communication apparatus according to an embodiment of this application.

### DESCRIPTION OF EMBODIMENTS

### 1. ProSe

ProSe communication refers to indirect communication between two terminals through relay of at least one relay terminal. Specifically, the terminals may communicate with each other through a proximity communication (proximity communication, PC) 5 interface.

The ProSe communication may be applied to a scenario in which two terminals cannot directly communicate with each other, that is, the ProSe communication may be applied to a scenario in which two terminals cannot directly communicate with each other through a PC5 interface. In this scenario, a terminal-to-terminal (user equipment-to-user equipment, U2U) connection needs to be implemented. Specifically, communication between the two terminals may be implemented through message relaying of at least one relay terminal.

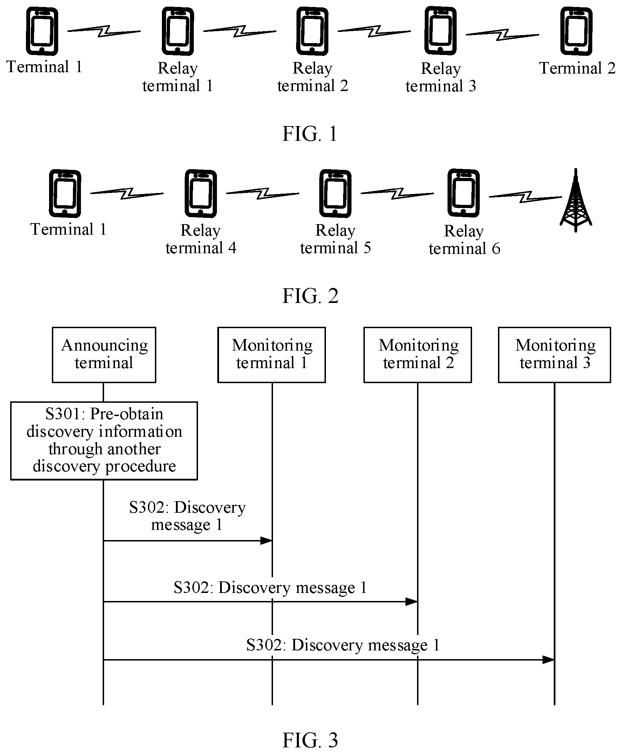

For example, as shown in FIG. 1, when a terminal 1 cannot directly communicate with a terminal 2 through a PC5 interface, the terminal 1 may perform multi-hop relaying through a relay terminal 1, a relay terminal 2, and a relay terminal 3, to implement an indirect connection to the terminal 2.

However, the ProSe communication may be further applied to a scenario in which a terminal cannot directly access a network, that is, the ProSe communication may be applied to a scenario in which the terminal cannot directly communicate with the network through an air interface. In this scenario, a terminal-to-network (user equipment-to-network, U2N) connection needs to be implemented. Specifically, through message relaying of at least one relay terminal, the terminal may be connected to a relay terminal that can access the network, so that the terminal can communicate with the network through the relay terminal that can access the network.

For example, as shown in FIG. 2, when a terminal 1 cannot directly access a network, the terminal 1 may perform multi-hop relaying through a relay terminal 4 and a relay terminal 5, to implement a connection to a relay terminal (namely, a relay terminal 6) that can access the network. In this way, the terminal 1 can indirectly access the network through the relay terminal 6.

### 2. Discovery process

The discovery process is a process in which a terminal searches for a surrounding terminal that can perform direct communication. After the discovery process, the terminal may establish a unicast connection to the discoveree terminal to implement data transmission. The current discovery process includes a model A (model A) discovery process and a model B (model B) discovery process, which are separately described below.

### 2.1. Model A discovery process

As shown in FIG. 3, the model A discovery process may be specifically implemented in the following S301 and S302.

S301: An announcing terminal (announcing UE) obtains discovery information (discovery information) in advance through another discovery process.

Because the model A discovery process is initiated by a relay terminal, the announcing terminal is a relay terminal (relay UE).

In the model A discovery process, the discovery information may also be referred to as an announcement message (announcement message), or may be carried in the announcement message. For example, the discovery information in the model A discovery process may include at least one of the following: a discovery type, user information (user information, user info) of a monitoring terminal, a relay service code (relay service code, RSC) corresponding to a service of the monitoring terminal, or a user info ID of the announcing terminal. In this case, the discovery type may indicate that the discovery process is the model A discovery process. Certainly, the foregoing description is merely an example of the discovery information in the model A discovery process. The discovery information in the model A discovery process may further include other information. This is not limited in embodiments of this application. In addition, the discovery information may include a direct discovery set (direct discovery set). The direct discovery set may include one or more pieces of user information, and the user information may include a user information identifier (user information ID, user info ID) and an application layer identifier (application layer ID).

S302: The announcing terminal broadcasts a discovery message 1, and correspondingly, the monitoring terminal (monitoring UE) receives the discovery message 1.

For example, as shown in FIG. 3, S302 may be: The announcing terminal broadcasts the discovery message 1, and correspondingly, a monitoring terminal 1 and a monitoring terminal 2 separately receive the discovery message 1.

The monitoring terminal may also be referred to as a destination terminal (end UE). The discovery message 1 includes a source layer 2 (layer 2, L2) identifier (identifier, ID), a destination L2 ID, and the discovery information. The source L2 ID is an L2 ID allocated to the announcing terminal. The destination L2 ID is an allocated L2 ID in the broadcast message.

In addition, the model A discovery process may be further classified into a model A U2U discovery process and a model A U2N discovery process. For both the model A U2U discovery process and the model A U2N discovery process, refer to the procedure shown in FIG. 3 for understanding. Details are not described herein again. However, a difference between the model A U2U discovery process and the model A U2N discovery process lies in a target terminal. In an example of single-hop relaying, that is, the monitoring terminal is the target terminal, in the model A U2U discovery process, the monitoring terminal may be connected to a network, or may not be connected to the network; while in the model A U2N discovery process, the monitoring terminal needs to be connected to the network.

### 2.2. Model B discovery process

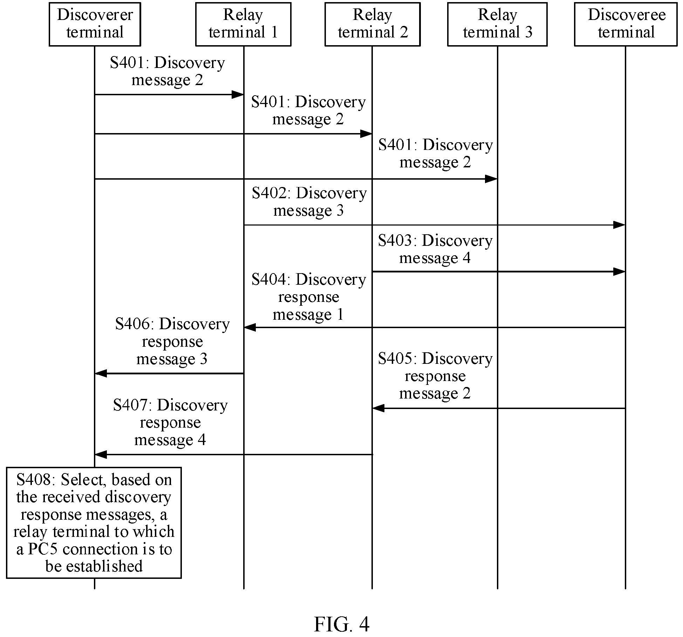

The model B discovery process may be further classified into a model B U2U discovery process and a model B U2N discovery process. As shown in FIG. 4, for example, model B U2U relay discovery is single-hop discovery. The model B U2U discovery process may be specifically implemented in the following S401 to S408.

S401: A discoverer terminal (discoverer) broadcasts a discovery message 2, and correspondingly, a relay terminal 1, a relay terminal 2, and a relay terminal 3 receive the discovery message 2.

The discoverer terminal may also be referred to as a source terminal (source UE). In model B, the discovery message may also be referred to as a solicitation message (solicitation message). The discovery message 2 may include a source L2 ID, a destination L2 ID, and discovery information. The source L2 ID in the discovery message 2 is an L2 ID allocated to the discoverer terminal, and the destination L2 ID in the discovery message 2 is an allocated L2 ID in the broadcast message. The discovery information in the model B U2U discovery process may include at least one of the following: a discovery type, a user info ID of the discoverer terminal, an RSC, or a user info ID of a discoveree terminal. In this case, the discovery type may indicate that the discovery process is the model B U2U discovery process.

Specifically, the discovery message 2 may be used to solicit to discover a target terminal, for example, may be a discovery solicitation message. Further, the discovery information is carried in the discovery solicitation message.

Certainly, the foregoing description is merely an example of the discovery information in the model B U2U discovery process. The discovery information in the model B U2U discovery process may further include other information. This is not limited in embodiments of this application.

S402: The relay terminal 1 broadcasts a discovery message 3, and correspondingly, the discoveree terminal receives the discovery message 3.

The discoveree terminal may also be referred to as a target terminal (target UE), and the discoveree terminal may also be referred to as an end terminal (end UE). The discovery message 3 is obtained by adding an identifier of the relay terminal 1 based on the discovery message 2, that is, the discovery message 3 may include the identifier of the relay terminal 1 and the discovery information. In addition, a source L2 ID in the discovery message 3 is an L2 ID allocated to the relay terminal 1, and a destination L2 ID in the discovery message 3 is the allocated L2 ID in the broadcast message.

S403: The relay terminal 2 broadcasts a discovery message 4, and correspondingly, the discoveree terminal receives the discovery message 4.

The discovery message 4 is obtained by adding an identifier of the relay terminal 2 based on the discovery message 2, that is, the discovery message 4 may include the identifier of the relay terminal 2 and the discovery information. In addition, a source L2 ID in the discovery message 4 is an L2 ID allocated to the relay terminal 2, and a destination L2 ID in the discovery message 4 is the allocated L2 ID in the broadcast message. For the discovery information, refer to the foregoing descriptions at corresponding positions for understanding. Details are not described herein again.

It should be noted that both the relay terminal 1 and the relay terminal 2 are relay terminals that support broadcasting the discovery information.

Optionally, the relay terminal may determine, based on signal quality, whether broadcasting the discovery information is supported, or may determine, based on a supported service type, whether broadcasting the discovery information is supported. Certainly, the foregoing description is merely an example of a case in which the relay terminal determines whether broadcasting the discovery information is supported. The relay terminal may further determine, based on another parameter, whether broadcasting the discovery information is supported. This is not limited in embodiments of this application.

S404: The discoveree terminal sends a discovery response message 1 to the relay terminal 1, and correspondingly, the relay terminal 1 receives the discovery response message 1 from the discoveree terminal.

Specifically, S404 may be: The discoveree terminal sends the discovery response message 1 to the relay terminal 1 in a unicast manner, and correspondingly, the relay terminal 1 receives the discovery response message 1 from the discoveree terminal.

The discovery response message 1 may include a source L2 ID, a destination L2 ID, and discovery response information. The source L2 ID in the discovery response message 1 is an L2 ID allocated to the discoveree terminal, and the destination L2 ID in the discovery response message 1 is the L2 ID allocated to the relay terminal 1. The discovery response information may include at least one of the following: the discovery type, the user info ID of the discoverer terminal, the RSC, the user info ID of the discoveree terminal, or a user info ID of the relay terminal 1. Certainly, the foregoing description is merely an example of the discovery response information. The discovery response information may further include other information. This is not limited in embodiments of this application.

S405: The discoveree terminal sends a discovery response message 2 to the relay terminal 2, and correspondingly, the relay terminal 2 receives the discovery response message 2 from the discoveree terminal.

Specifically, S405 may be: The discoveree terminal sends the discovery response message 2 to the relay terminal 2, and correspondingly, the relay terminal 2 receives the discovery response message 2 from the discoveree terminal.

The discovery response message 2 may include a source L2 ID, a destination L2 ID, and discovery response information. The source L2 ID in the discovery response message 2 is the L2 ID allocated to the discoveree terminal, and the destination L2 ID in the discovery response message 2 is the L2 ID allocated to the relay terminal 2. For the discovery response information, refer to the foregoing descriptions at corresponding positions for understanding. Details are not described herein again.

Optionally, the discoveree terminal may send discovery response messages to all relay terminals that broadcast the discovery information to the discoveree terminal, or may broadcast a discovery response message to a part of relay terminals that send the discovery information to the discoveree terminal. This is not limited in embodiments of this application.

In addition, optionally, the part of relay terminals may be determined by the discoveree terminal, based on a parameter like signal quality, from all the relay terminals that broadcast the discovery information to the discoveree terminal. This is not limited in embodiments of this application.

S406: The relay terminal 1 sends a discovery response message 3 to the discoverer terminal, and correspondingly, the discoverer terminal receives the discovery response message 3 from the relay terminal 1.

Specifically, S406 may be: The relay terminal 1 sends the discovery response message 3 to the discoverer terminal in a unicast manner, and correspondingly, the discoverer terminal receives the discovery response message 3 from the relay terminal 1.

The discovery response message 3 may include a source L2 ID, a destination L2 ID, and discovery response information. The source L2 ID in the discovery response message 3 is the L2 ID allocated to the relay terminal 1, and the destination L2 ID in the discovery response message 3 is the L2 ID allocated to the discoverer terminal. For the discovery response information, refer to the foregoing descriptions at corresponding positions for understanding. Details are not described herein again.

S407: The relay terminal 2 sends a discovery response message 4 to the discoverer terminal, and correspondingly, the discoverer terminal receives the discovery response message 4 from the relay terminal 2.

Specifically, S407 may be: The relay terminal 2 sends the discovery response message 4 to the discoverer terminal, and correspondingly, the discoverer terminal receives the discovery response message 4 from the relay terminal 2.

The discovery response message 4 may include a source L2 ID, a destination L2 ID, and discovery response information. The source L2 ID in the discovery response message 4 is the L2 ID allocated to the relay terminal 2, and the destination L2 ID in the discovery response message 4 is the L2 ID allocated to the discoverer terminal. For the discovery response information, refer to the foregoing descriptions at corresponding positions for understanding. Details are not described herein again.

S408: The discoverer terminal selects, based on the received discovery response messages, a relay terminal to which a PC5 connection is to be established.

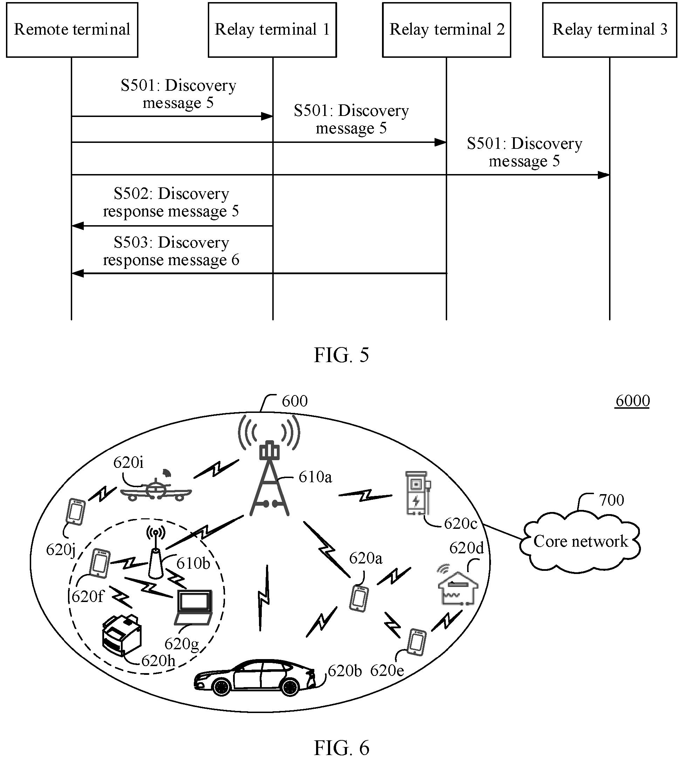

As shown in FIG. 5, for example, model B U2N relay discovery is single-hop discovery. A specific procedure of the model B U2N relay discovery may include S501 to S503.

S501: A remote terminal (remote UE) broadcasts a discovery message 5, and correspondingly, a relay terminal 1, a relay terminal 2, and a relay terminal 3 receive the discovery message 5.

The discovery message 5 includes a source L2 ID, a destination L2 ID, and discovery information. The source L2 ID in the discovery message 5 is an L2 ID allocated to the remote terminal, and the destination L2 ID in the discovery message 5 is an allocated L2 ID in the broadcast message. The discovery information in the model B U2N discovery process may include at least one of the following: a discovery type, a user info ID of the remote terminal, or an RSC. In this case, the discovery type may indicate that the discovery process is the model B U2N discovery process.

Certainly, the foregoing description is merely an example of the discovery information in the model B U2N discovery process. The discovery information in the model B U2N discovery process may further include other information. This is not limited in embodiments of this application.

S502: The relay terminal 1 sends a discovery response message 5 to the remote terminal, and correspondingly, the remote terminal receives the discovery response message 5 from the relay terminal 1.

Specifically, S502 may be: The relay terminal 1 sends the discovery response message 5 to the remote terminal in a unicast manner, and correspondingly, the remote terminal receives the discovery response message 5 from the relay terminal 1.

The discovery response message 5 may include a source L2 ID, a destination L2 ID, and discovery response information. The source L2 ID in the discovery response message 5 is an L2 ID allocated to the relay terminal 1, and the destination L2 ID in the discovery response message 5 is the L2 ID allocated to the remote terminal. For the discovery response information, refer to the foregoing descriptions at corresponding positions for understanding. Details are not described herein again.

S503: The relay terminal 2 sends a discovery response message 6 to the remote terminal, and correspondingly, the remote terminal receives the discovery response message 6 from the relay terminal 2.

It should be noted that, both the relay terminal 1 and the relay terminal 2 are relay terminals that can be connected to a network (in-coverage relay UE).

Specifically, S503 may be: The relay terminal 2 sends the discovery response message 6 to the remote terminal, and correspondingly, the remote terminal receives the discovery response message 6 from the relay terminal 2.

The discovery response message 6 may include a source L2 ID, a destination L2 ID, and discovery response information. The source L2 ID in the discovery response message 6 is an L2 ID allocated to the relay terminal 2, and the destination L2 ID in the discovery response message 6 is the L2 ID allocated to the remote terminal. For the discovery response information, refer to the foregoing descriptions at corresponding positions for understanding. Details are not described herein again.

It can be learned from the foregoing related descriptions of "ProSe communication" that, in a communication system that supports ProSe, if a terminal (denoted as a terminal 1) cannot directly communicate with another terminal (denoted as a terminal 2), the terminal 1 may determine a plurality of relay terminals through a discovery process, and communication between the terminal 1 and the terminal 2 or between the terminal 1 and a network is implemented through the plurality of relay terminals. If a terminal 1 cannot directly communicate with a network, the terminal 1 may determine a plurality of relay terminals through a discovery process, and through the plurality of relay terminals, the terminal 1 is connected to a terminal (denoted as a terminal 3) that can be connected to the network, to implement communication between the terminal 1 and the network through the terminal 3.

However, in the discovery process, a hop count for transmitting the discovery information needs to be limited, to avoid endless transmission of the discovery information.

Optionally, there may be the following three implementations of limiting the hop count for transmitting the discovery information.

Implementation 1: When a relay terminal receives a discovery message, the relay terminal adds 1 to a hop count indicator included in the discovery message, to determine a hop count, counted by the relay terminal, of transmitted discovery information, and when the hop count, counted by the relay terminal, of the transmitted discovery information is less than a maximum hop number, the relay terminal broadcasts a discovery message including the discovery information.

Specifically, an example in which the discovery process is the model B U2U discovery process is used. Implementation 1 may specifically include the following steps.

Step 1: A discoverer terminal broadcasts a discovery message #1, and correspondingly, a relay terminal receives the discovery message #1.

In this case, the discovery message #1 includes the foregoing source L2 ID, destination L2 ID, and discovery information, and also includes a maximum hop number and a hop count indicator, where the maximum hop number is a maximum hop number for transmitting the discovery information, the discovery information is used by the discoverer terminal to discover a discoveree terminal, or the discovery information is used by a remote terminal to discover a relay terminal that can be connected to a network, and the hop count indicator indicates a hop count, counted by the discoverer terminal, of the transmitted discovery information. Generally, the hop count indicator carried in the discovery message #1 is 0.

Step 2: A relay terminal 1 adds 1 to the hop count indicator included in the discovery message #1, to obtain a hop count indicator determined by the relay terminal 1, and when the hop count indicator determined by the relay terminal 1 is less than the maximum hop number, broadcasts a discovery message #2, and correspondingly, a relay terminal 2 receives the discovery message #2.

For the discovery message #2, refer to the discovery message #1 for understanding. Details are not described herein again.

Step 3: The relay terminal 2 adds 1 to the hop count indicator carried in the discovery message #2, to obtain a hop count indicator determined by the relay terminal 2, and when the hop count indicator determined by the relay terminal 2 is less than the maximum hop number, broadcasts a discovery message #3, and correspondingly, the discoveree terminal receives the discovery message #3.

For the discovery message #3, refer to the discovery message #1 for understanding. Details are not described herein again.

Implementation 2: When a relay terminal receives a discovery message, the relay terminal subtracts 1 from a hop count indicator included in the discovery message, to determine a remaining maximum hop number for transmitting discovery information, and when the remaining maximum hop number, determined by the relay terminal, for transmitting the discovery information is greater than 0, the relay terminal broadcasts a discovery message including the discovery information.

Specifically, an example in which the discovery process is the model B U2U discovery process is used. Implementation 2 may specifically include the following steps.

Step 4: A discoverer terminal broadcasts a discovery message #4, and correspondingly, a relay terminal receives the discovery message #4.

In this case, the discovery message #4 includes the foregoing source L2 ID, destination L2 ID, and discovery information, and also includes a maximum hop number and a hop count indicator, where the maximum hop number is a maximum hop number for transmitting the discovery information, the discovery information is used by the discoverer terminal to discover a discoveree terminal, or the discovery information is used by a remote terminal to discover a relay terminal that can be connected to a network, and the hop count indicator indicates a remaining maximum hop number for transmitting the discovery information. Generally, the hop count indicator carried in the discovery message #4 is the maximum hop number included in the discovery message #4.

Step 5: A relay terminal 1 subtracts 1 from the hop count indicator included in the discovery message #4, to obtain a hop count indicator determined by the relay terminal 1, and when the hop count indicator determined by the relay terminal 1 is greater than 0, broadcasts a discovery message #5, and correspondingly, a relay terminal 2 receives the discovery message #5.

For the discovery message #5, refer to the discovery message #4 for understanding. Details are not described herein again.

Step 6: The relay terminal 2 subtracts 1 from the hop count indicator carried in the discovery message #5, to obtain a hop count indicator determined by the relay terminal 2, and when the hop count indicator determined by the relay terminal 2 is greater than 0, broadcasts a discovery message #6, and correspondingly, the discoveree terminal receives the discovery message #6.

For the discovery message #6, refer to the discovery message #4 for understanding. Details are not described herein again.

Implementation 3: When a relay terminal receives a discovery message, the relay terminal determines, based on a quantity of identifiers of relay terminals that relay discovery information and that is included in the received discovery message, a hop count of the transmitted discovery information; and when the hop count, determined by the relay terminal, of the transmitted discovery information is less than a maximum hop number, the relay terminal sends a discovery message.

Specifically, an example in which the discovery process is the model B U2U discovery process is used. Implementation 3 may specifically include the following steps.

Step 7: A discoverer terminal broadcasts a discovery message #7t, and correspondingly, a relay terminal receives the discovery message #7.

In this case, the discovery message #7 includes the foregoing source L2 ID, destination L2 ID, and discovery information, and also includes a maximum hop number and an identifier of a relay terminal that relays the discovery information, where the maximum hop number is a maximum hop number for transmitting the discovery information, and the discovery information is used by the discoverer terminal to discover a discoveree terminal, or the discovery information is used by a remote terminal to discover a relay terminal that can be connected to a network.

Step 8: A relay terminal 1 determines, based on a quantity of identifiers of relay terminals that relay the discovery information and that are included in the discovery message #7, a hop count of the transmitted discovery information, and when the hop count, determined by the relay terminal 1, of the transmitted discovery information is less than the maximum hop number, broadcasts a discovery message #8, and correspondingly, a relay terminal 2 receives the discovery message #8.

For the discovery message #8, refer to the discovery message #7 for understanding. Details are not described herein again.

Step 9: The relay terminal 2 determines, based on a quantity of identifiers of relay terminals that relay the discovery information and that are included in the discovery message #8, a hop count of the transmitted discovery information, and when the hop count, determined by the relay terminal 2, of the transmitted discovery information is less than the maximum hop number, broadcasts a discovery message #9, and correspondingly, the discoveree terminal receives the discovery message #9.

For the discovery message #9, refer to the discovery message #7 for understanding. Details are not described herein again.

However, a value (namely, a value of the maximum hop number), recorded in Implementation 1 to Implementation 3, used to limit the hop count for transmitting the discovery message is preconfigured. In this case, it is likely that the value used to limit the hop count for transmitting the discovery information is not applicable to an actual situation, and consequently, service requirements between terminals may not be met.

Based on this, embodiments of this application provide an information transmission method. A source terminal may determine a maximum hop number (namely, a first hop count) for transmitting discovery information, and send a first discovery message including the first hop count and the discovery information. In this way, another terminal can learn of the first hop count when receiving the discovery information, so that the source terminal can limit, based on the first hop count in a discovery process, a hop count for transmitting the discovery information. Because a quality of service parameter corresponding to a first service, a relay service type corresponding to the first service, a type of the first service, and a hop count requirement of the first service that are included in information about the first service are all parameters related to service requirements, and the first hop count is related to at least one of the quality of service parameter corresponding to the first service, the relay service type corresponding to the first service, the type of the first service, or the hop count requirement of the first service, the first hop count can better meet an actual requirement of the service, so that it can be ensured as much as possible that service requirements between terminals are met.

The following describes the technical solutions in embodiments of this application with reference to the accompanying drawings in embodiments of this application.

For ease of understanding of embodiments of this application, the following descriptions are first provided before embodiments of this application are described.
1. In embodiments of this application, for ease of description, when numbering is involved, numbering may be performed consecutively starting from 1, or may be performed consecutively starting from 0, or may be performed starting from any parameter. It should be understood that the foregoing descriptions are all settings for ease of describing the technical solutions provided in embodiments of this application, but are not intended to limit the scope of embodiments of this application.
2. In embodiments of this application, "indication" may include a direct indication and an indirect indication, or may include an explicit indication and an implicit indication. Information indicated by a piece of information (for example, first indication information described below) is referred to as to-be-indicated information. In a specific implementation process, the to-be-indicated information is indicated in a plurality of manners, for example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overhead to some extent. In addition, a common part of all pieces of information may be identified and indicated in a unified manner, to reduce indication overhead caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of the sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device. The configuration information may include, for example, but is not limited to, radio resource control signaling.

3. "Predefinition" or "preconfiguration" may be implemented by pre-storing corresponding code or a corresponding table in a device (for example, including a source terminal and/or a first relay terminal and/or a second relay terminal) or in another manner that can indicate related information. A specific implementation of "predefinition" or "preconfiguration" is not limited in embodiments of this application. "Storage" may be storage in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.

4. In embodiments of this application, "protocol" may be a standard protocol in the communication field, for example, may include a long term evolution (long term evolution, LTE) protocol, an NR protocol, and a related protocol applied to a future communication system. This is not limited in embodiments of this application.

5. In embodiments of this application, descriptions such as "when...", "in a case of...", and "if" all mean that a device (for example, a source terminal and/or a first relay terminal and/or a second relay terminal) performs corresponding processing in an objective case, but do not constitute a limitation on time, do not require the device (for example, the source terminal and/or the first relay terminal and/or the second relay terminal) to perform a determining action during implementation, and do not mean other limitations either.

6. In descriptions of this application, "/" represents an "or" relationship between associated objects unless otherwise specified. For example, A/B may represent A or B. The term "and/or" in embodiments of this application describes an association relationship between associated objects and indicates that three relationships may exist. For example, A and/or B may indicate the following three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Embodiments of this application are applicable to a long term evolution (long term LTE) system, an NR system (which may also be referred to as a 5G system), a vehicle-to-everything (vehicle-to-everything, V2X) system, an LTE-NR hybrid networking system, a device-to-device (device-to-device, D2D) system, a machine-to-machine (machine-to-machine, M2M) communication system, an internet of things (internet of thing, IoT) system (for example, a narrowband internet of things (narrowband internet of thing, NB-IoT) system), and another next-generation communication system. Alternatively, the communication system may be a non-3GPP communication system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the communication architecture and the emergence of new service scenarios, the technical solutions provided in embodiments of this application are also applicable to similar technical problems.

FIG. 6 is a diagram of a possible non-limiting system. As shown in FIG. 6, the communication system 6000 includes a radio access network (radio access network, RAN) 600 and a core network (core network, CN) 700. The RAN 600 includes at least one RAN node (610a and 610b in FIG. 6, which are collectively referred to as 610) and at least one terminal (620a to 620j in FIG. 6, which are collectively referred to as 620). The RAN 600 may further include another RAN node, for example, a wireless relay device and/or a wireless backhaul device (not shown in FIG. 6). The terminal 620 is connected to the RAN node 610 in a wireless manner. The RAN node 610 is connected to the core network 700 in a wireless or wired manner. A core network device in the core network 700 and the RAN node 610 in the RAN 600 may be different physical devices, or may be a same physical device that integrates a logical function of the core network and a logical function of the radio access network.

The RAN 600 may be a cellular system related to the 3rd generation partnership project (3rd generation partnership project, 3GPP), for example, a 4th generation (4th generation, 4G) or 5th generation (5th generation, 5G) mobile communication system, or a future-oriented evolved system (for example, a 6th generation (6th generation, 6G) mobile communication system). The RAN 600 may alternatively be an open access network (open RAN, O-RAN or ORAN), a cloud radio access network (cloud radio access network, CRAN), or a wireless fidelity (wireless fidelity, Wi-Fi) system. Alternatively, the RAN 600 may be a communication system that integrates two or more of the foregoing systems.

Alternatively, the RAN node 610 may be sometimes referred to as an access network device, a RAN entity, an access node, or the like, and forms a part of the communication system, to help the terminal implement radio access. A plurality of RAN nodes 610 in the communication system 6000 may be nodes of a same type, or may be nodes of different types. In some scenarios, roles of the RAN node 610 and the terminal 620 are relative. For example, a network element 620i in FIG. 6 may be a helicopter or an uncrewed aerial vehicle, and may be configured as a mobile base station. For a terminal 620j that accesses the RAN 600 via the network element 620i, the network element 620i is a base station. However, for a base station 610a, the network element 620i is a terminal. The RAN node 610 and the terminal 620 are sometimes referred to as communication apparatuses. For example, network elements 610a and 610b in FIG. 6 may be understood as communication apparatuses having a base station function, and network elements 620a to 620j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 610a in FIG. 6), a micro base station or an indoor station (for example, 610b in FIG. 6), a relay node or a donor node, or a radio controller in a CRAN scenario. Optionally, alternatively, the RAN node may be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

In a possible scenario, the terminal may be a device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device or a wearable device, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal may be mobile or fixed.

In a possible implementation, the source terminal, the first relay terminal, and the second relay terminal in embodiments of this application may also be referred to as communication apparatuses, and may be a general-purpose device or a dedicated device. This is not specifically limited in embodiments of this application.

In a possible implementation, related functions of the source terminal, the first relay terminal, and the second relay terminal in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

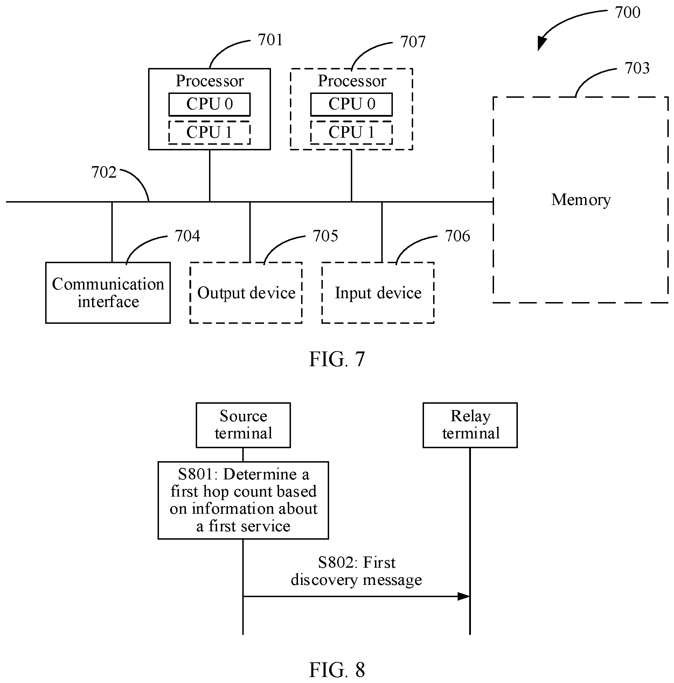

For example, the related functions of the source terminal, the first relay terminal, or the second relay terminal in embodiments of this application may be implemented by a communication apparatus 700 in FIG. 7. FIG. 7 is a diagram of a structure of a communication apparatus 700 according to an embodiment of this application. The communication apparatus 700 includes one or more processors 701, a communication line 702, and at least one communication interface (only an example in which a communication interface 704 and one processor 701 are included is used for description in FIG. 7), and may further include a memory 703.

The processor 701 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 702 may include a path, configured to connect different components.

The communication interface 704 may be a transceiver module configured to communicate with another device or a communication network, for example, an Ethernet, a RAN, or a wireless local area network (wireless local area network, WLAN). For example, the transceiver module may be an apparatus like a transceiver or a transceiver machine. In a possible implementation, the communication interface 704 may alternatively be a transceiver circuit located in the processor 701, and is configured to implement signal input and signal output of the processor.

The memory 703 may be an apparatus having a storage function. For example, the memory 703 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may independently exist and is connected to the processor through the communication line 702. The memory may alternatively be integrated with the processor.

The memory 703 is configured to store computer-executable instructions for executing the solutions of this application, and the processor 701 controls the execution. The processor 701 is configured to execute the computer-executable instructions stored in the memory 703, to implement the information transmission method provided in embodiments of this application.

Alternatively, in embodiments of this application, the processor 701 may perform a processing-related function in the information transmission method provided in the following embodiments of this application, and the communication interface 704 is responsible for communicating with the another device or the communication network. This is not specifically limited in embodiments of this application.

In a possible implementation, the memory 703 in embodiments of this application may be further configured to store information or a parameter described in the following embodiments, for example, first indication information.

The computer-executable instructions in embodiments of this application may also be referred to as application code. This is not specifically limited in embodiments of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 707 shown in FIG. 7. Each of the processors may be a single-core (single-CPU) processor, or may be a multicore (multi-CPU) processor. The processor herein may be one or more devices, circuits, and/or processing cores configured to process data (for example, computer program instructions).

In a specific implementation, in an embodiment, the communication apparatus 700 may further include an output device 705 and an input device 706. The output device 705 communicates with the processor 701, and may display information in a plurality of manners.

The communication apparatus 700 may be a general-purpose apparatus or a dedicated apparatus. For example, the communication apparatus 700 may be a desktop computer, a portable computer, a network server, a personal digital assistant (personal digital assistant, PDA), a mobile phone, a tablet computer, a wireless terminal, an embedded device, or a device having a similar structure in FIG. 7. A type of the communication apparatus 700 is not limited in embodiments of this application.

With reference to FIG. 7, the following describes the information transmission method provided in embodiments of this application.

It should be noted that in the following embodiments of this application, a name of a message between network elements, a name of each parameter, a name of each piece of information, or the like is merely an example, and may be another name in another embodiment. This is not specifically limited in the method provided in embodiments of this application. It may be understood that in embodiments of this application, each network element may perform some or all of steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

FIG. 8 shows an example of an information transmission method according to an embodiment of this application. The method is described by using a source terminal as an execution body. Certainly, an action of the source terminal in the method may alternatively be performed by an apparatus/a module in the source terminal, for example, a chip, a processor, or a processing unit in the source terminal. This is not specifically limited in embodiments of this application. For example, as shown in FIG. 8, the information transmission method includes the following steps.

S801: The source terminal determines a first hop count based on information about a first service.

The first hop count is a maximum hop number for transmitting discovery information. The discovery information is used by the source terminal to discover a target terminal. The information about the first service includes at least one of the following: a quality of service parameter corresponding to the first service, a relay service type corresponding to the first service, a type of the first service, or a hop count requirement of the first service.

Optionally, the quality of service parameter may be a quality of service (quality of service, QoS) parameter. The QoS parameter may be a non-quantized QoS parameter, that is, the QoS parameter includes a specific parameter. For example, the QoS parameter may include a delay of 20 milliseconds and a packet loss rate less than or equal to 2%. Certainly, the foregoing description is merely an example of the QoS parameter. The QoS parameter may further include another parameter. This is not limited in embodiments of this application.

However, the QoS parameter may alternatively be a quantized QoS parameter, and may be specifically a 5G QoS identifier (5G QoS identifier, 5QI) or a PC5 5G QoS identifier (PC5 5QI, PQI). The 5QI or the PQI includes quantized values, for example, 1, 2, ..., N, where N is a positive integer greater than 2, and each quantized value corresponds to a specific parameter. For example, the QoS parameter may be 21. In this case, specific parameters corresponding to the QoS parameter are a delay of 20 milliseconds and a packet loss rate less than or equal to 0.01%.

For example, the type of the first service may include at least one of the following: a service type (service type), a ProSe ID, or an application (application) ID. Certainly, the foregoing description is merely an example of the type of the first service. The type of the first service may further include other information. This is not limited in embodiments of this application.

The relay service type may be an RSC. Certainly, the foregoing description is merely an example of the relay service type. The relay service type may alternatively be other information. This is not limited in embodiments of this application.

In some possible implementations, a hop count in this application may be represented by using a quantity of relay terminals, or may be represented by using a quantity of PC5 connections. This is not limited in embodiments of this application. For example, when there are three relay terminals in a path from the source terminal to a destination terminal, if the hop count is understood as the quantity of relay terminals, the hop count of the path is three hops; or if the hop count is understood as the quantity of PC5 connections, the hop count of the path is four hops.

S802: The source terminal sends a first discovery message, and correspondingly, a relay terminal receives the first discovery message.

The first discovery message may include the first hop count and the discovery information.

The first discovery message may be used to solicit to discover the target terminal, for example, may be a discovery solicitation message.

In embodiments of this application, the source terminal may determine the maximum hop number (namely, the first hop count) for transmitting the discovery information, and send the first discovery message including the first hop count and the discovery information. In this way, another terminal can learn of the first hop count when receiving the discovery information, so that the source terminal can limit, based on the first hop count in a discovery process, a hop count for transmitting the discovery information. Because the quality of service parameter corresponding to the first service, the relay service type corresponding to the first service, the type of the first service, and the hop count requirement of the first service that are included in the information about the first service are all parameters related to service requirements, and the first hop count is related to at least one of the quality of service parameter corresponding to the first service, the relay service type corresponding to the first service, the type of the first service, or the hop count requirement of the first service, the first hop count can better meet an actual requirement of the service, so that it can be ensured as much as possible that service requirements between terminals are met.

Optionally, it can be learned from the foregoing related descriptions of S801 that the source terminal determines the first hop count based on the information about the first service, and the information about the first service may include the quality of service parameter corresponding to the first service. In view of this, the source terminal may determine the first hop count based on the quality of service parameter corresponding to the first service. In other words, in this case, the first hop count is determined based on the quality of service parameter corresponding to the first service.

It may be understood that, because the quality of service parameter corresponding to the first service can accurately reflect a parameter related to the service requirement, the first hop count determined based on the quality of service parameter corresponding to the first service can meet the actual requirement of the service as much as possible, thereby ensuring that the service requirement between the terminals is met as much as possible.

However, in this case, when the source terminal sends the discovery information, the source terminal may simultaneously send the first hop count, or may not simultaneously send the first hop count. The following separately describes in detail an implementation process in which the source terminal simultaneously sends the first hop count or does not simultaneously send the first hop count when the source terminal sends the discovery information.

In a possible implementation, when the first hop count is different from a maximum hop number determined based on the relay service type corresponding to the first service (for example, a maximum hop number corresponding to the relay service type corresponding to the first service, where for details, refer to related descriptions of first indication information in S901), the first discovery message is generated and sent. In other words, when the first hop count is different from the maximum hop number determined based on the relay service type corresponding to the first service, when the source terminal sends the discovery information, the source terminal may simultaneously send the first hop count.

With reference to the foregoing related descriptions of the "first hop count", it can be learned that the first hop count determined based on the quality of service parameter corresponding to the first service can meet the actual requirement of the service as much as possible, thereby ensuring that the service requirement between the terminals is met as much as possible. In view of this, when the first hop count determined based on the quality of service parameter corresponding to the first service is different from the maximum hop number determined based on the relay service type corresponding to the first service, the first discovery message is generated and sent, that is, the first hop count is further simultaneously sent when the discovery information is sent, so that a terminal that receives the first discovery message can obtain the first hop count that can better meet the actual requirement of the service, thereby further ensuring that the service requirement between the terminals is met.

Further, optionally, when the first discovery message includes the first hop count (for example, a maximum hop number 1), the relay terminal may use the first hop count in the first discovery message as the maximum hop number for transmitting the discovery information.

In another possible implementation, when the first hop count is the same as a maximum hop number determined based on the relay service type corresponding to the first service (for example, a maximum hop number corresponding to the relay service type corresponding to the first service, where for details, refer to related descriptions of first indication information in S901), an eleventh discovery message is generated and sent, where the eleventh discovery message includes the discovery information, and the eleventh discovery message does not include the first hop count. In other words, when the first hop count is the same as the maximum hop number determined based on the relay service type corresponding to the first service, when the source terminal sends the discovery information, the source terminal may not simultaneously send the first hop count.

In other words, because the maximum hop number determined based on the relay service type corresponding to the first service is well known to each terminal related to the first service, when the first hop count is the same as the maximum hop number determined based on the relay service type corresponding to the first service, each terminal related to the first service does not need to learn of the first hop count based on the first hop count sent by the source terminal. In this way, the source terminal does not need to send the first hop count when sending the discovery information, that is, the source terminal may send the eleventh discovery message, where the eleventh discovery message includes the discovery information, and the eleventh discovery message does not include the first hop count. In this way, signaling overhead can be reduced while it is ensured that the service requirement between the terminals is met.

Further, optionally, when the eleventh discovery message does not include the first hop count, the eleventh discovery message may include the relay service type. In this way, the relay terminal may determine the first hop count based on third indication information (for details, refer to related descriptions in S1302) and the relay service type (namely, the relay service type corresponding to the first service) included in the eleventh discovery message.

Specifically, the relay terminal may determine the first hop count based on the relay service type included in the eleventh discovery message and a correspondence, indicated by the third indication information, between a relay service type and a maximum hop number.

It should be noted that if the relay terminal cannot determine the first hop count based on the relay service type included in the eleventh discovery message and the correspondence, indicated by the third indication information, between the relay service type and the maximum hop number (for example, the third indication information does not include the relay service type included in the eleventh discovery message), the relay terminal determines that the maximum hop number for transmitting the discovery information is one hop.

The following describes an implementation in which the source terminal determines the first hop count recorded in S801.

Optionally, S801 may be replaced with S801A.

S801A: The source terminal determines a first hop count based on information about a first service.

It may be understood that, because a quality of service parameter corresponding to the first service, a relay service type corresponding to the first service, a type of the first service, and a hop count requirement of the first service that are included in the information about the first service are all parameters related to service requirements, the first hop count determined based on the information about the first service can meet an actual requirement of the service as much as possible, thereby ensuring that service requirements between terminals are met as much as possible.

In addition, when the source terminal cannot discover an available multi-hop connection that meets a requirement of the first hop count, the source terminal may also gradually increase the foregoing determined first hop count. For example, assuming that the foregoing determined first hop count is four hops, the source terminal may further determine the first hop count as five hops.

Further, optionally, the source terminal may determine the first hop count based on the information about the first service in the following two manners.

Manner 1: The source terminal determines the first hop count based on a pre-obtained correspondence related to the maximum hop number and the information about the first service.

Manner 2: The source terminal determines the first hop count based on a parameter related to the quality of service parameter.

Certainly, the foregoing description is merely an example of a manner in which the source terminal determines the first hop count based on the information about the first service. The source terminal may further determine the first hop count in another manner. This is not limited in embodiments of this application.

The following describes Manner 1 and Manner 2 in detail.

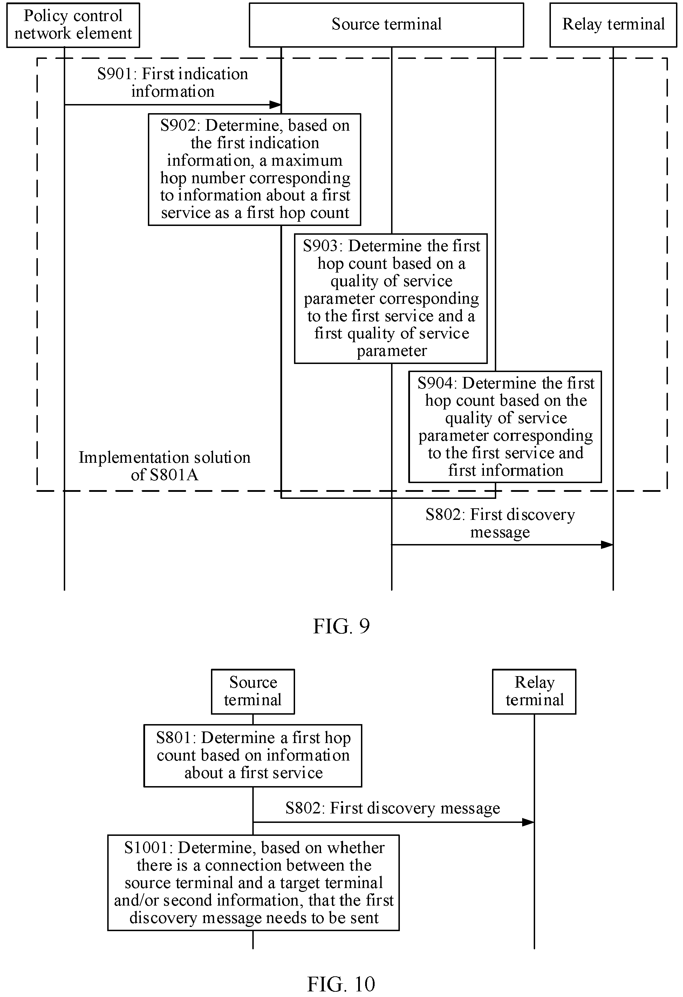

Manner 1: The source terminal determines the first hop count based on the pre-obtained correspondence related to the maximum hop number and the information about the first service. As shown in FIG. 9, in Manner 1, the source terminal needs to obtain the correspondence related to the maximum hop number in advance. However, a specific process in which the source terminal obtains the correspondence related to the maximum hop number in advance may be implemented in the following S901.

S901: A policy control network element sends first indication information to the source terminal, and correspondingly, the source terminal receives the first indication information from the policy control function network element.

The first indication information indicates a correspondence between at least one maximum hop number and at least one of at least one quality of service parameter, at least one relay service type, a type of at least one service, or a hop count requirement of the at least one service. The at least one quality of service parameter includes the quality of service parameter corresponding to the first service, the at least one relay service type includes the relay service type corresponding to the first service, the type of the at least one service includes the type of the first service, and the hop count requirement of the at least one service includes the hop count requirement of the first service.

In addition, the at least one maximum hop number may further have a correspondence with at least one ProSe ID; and/or the at least one maximum hop number may further have a correspondence with at least one app ID. In other words, the first indication information further indicates the correspondence between the at least one maximum hop number and the at least one ProSe ID and/or the correspondence between the at least one maximum hop number and the at least one app ID.

Optionally, the first indication information may further carry maximum hop number indication information corresponding to the relay service type. The maximum hop number indication information indicates that the first hop count is a maximum hop number corresponding to the relay service type. In this case, the source terminal may determine the maximum hop number corresponding to the relay service type as a first hop count carried in a first discovery message.

For example, the first indication information may be [RSC 1, maximum hop number 1, maximum hop number indication information; RSC 2, maximum hop number 2; RSC 3]. In other words, the maximum hop number indication information indicates that the first hop count is a maximum hop number corresponding to the RSC 1.

In view of this, in this implementation, the source terminal may determine the maximum hop number corresponding to the RSC 1 as the first hop count carried in the first discovery message.

In addition, because the first indication information does not carry maximum hop number indication information corresponding to the RSC 2, when the relay service type corresponding to the first service is the RSC 2, the first hop count carried in the first discovery message may be a maximum hop number corresponding to the RSC 2, or may not be the maximum hop number corresponding to the RSC 2.

In an example, if the first indication information indicates a relationship between the at least one maximum hop number and the at least one quality of service parameter, the first indication information may be specifically: A maximum hop number corresponding to a quality of service parameter 1 is 3, a maximum hop number corresponding to a quality of service parameter 2 is 4, and a maximum hop number corresponding to a quality of service parameter 3 is 5.

In another example, if the first indication information indicates a relationship between the at least one maximum hop number and the at least one relay service type, the first indication information may be specifically: A maximum hop number corresponding to a relay service type 1 is 3, a maximum hop number corresponding to a relay service type 2 is 4, and a maximum hop number corresponding to a relay service type 3 is 5.

In another example, if the first indication information indicates a relationship between the at least one maximum hop number and the at least one quality of service parameter and the at least one relay service type, the first indication information may be specifically: A maximum hop number corresponding to a quality of service parameter 1 and a relay service type 1 is 2, a maximum hop number corresponding to the quality of service parameter 1 and a relay service type 2 is 3, a maximum hop number corresponding to a quality of service parameter 2 and the relay service type 1 is 4, and a maximum hop number corresponding to the quality of service parameter 2 and the relay service type 2 is 5.

Certainly, the foregoing descriptions are merely examples of some of correspondences related to the maximum hop number. For example descriptions of other correspondences related to the maximum hop number, refer to the foregoing descriptions at corresponding positions for understanding. Details are not described herein again.

Optionally, before S901, the policy control function network element determines the correspondence related to the maximum hop number. However, the policy control function network element may determine the correspondence, related to the maximum hop number, by using the following three methods. Method 1: The policy control function network element determines, based on policy request information reported by an access and mobility management function network element or an application layer function network element, the correspondence related to the maximum hop number, where the policy request information is used to request a ProSe-related policy of the source terminal. Method 2: The policy control function network element determines, based on ProSe-related subscription information of the source terminal that is reported by a unified data management function network element, the correspondence related to the maximum hop number. Method 3: The policy control function network element determines, based on ProSe-related preconfiguration information, the correspondence related to the maximum hop number.

In some examples, the policy control function network element may be a policy control function (policy control function, PCF). Certainly, the foregoing description is merely an example of the policy control function network element. The policy control function network element may alternatively be another network element. This is not limited in embodiments of this application.

The unified data management function network element may be a unified data management (unified data management, UDM) function. Certainly, the foregoing description is merely an example of the unified data management function network element. The unified data management function network element may alternatively be another network element. This is not limited in embodiments of this application.

The access and mobility management function network element may be an authentication management function (access and mobility management function, AMF). Certainly, the foregoing description is merely an example of the access and mobility management function network element. The access and mobility management function network element may alternatively be another network element. This is not limited in embodiments of this application.

The application layer function network element may be an application layer function (application function, AF). Certainly, the foregoing description is merely an example of the application layer function network element. The application layer function network element may alternatively be another network element. This is not limited in embodiments of this application.

In Manner 1, S801A may be replaced with S902.

S902: The source terminal determines, based on the first indication information, a maximum hop number corresponding to the information about the first service as the first hop count.

For example, it is assumed that the first indication information indicates that the maximum hop number corresponding to the quality of service parameter 1 is 3, the information about the first service includes only the quality of service parameter corresponding to the first service, and the quality of service parameter corresponding to the first service is the quality of service parameter 1. In this way, the source terminal may determine that the first hop count is 3.

It may be understood that the source terminal may directly and simply determine the first hop count based on a correspondence between at least one of information related to service requirements (for example, a quality of service parameter and/or a relay service type and/or a type of a service and/or a hop count requirement of the service) and a maximum hop number. This reduces complexity of determining the first hop count by the source terminal, and further improves efficiency of determining the first hop count by the source terminal.

It should be noted that Manner 1 is not only applicable to a U2U scenario, but also applicable to a U2N scenario.

Manner 2: The source terminal determines the first hop count based on the parameter related to the quality of service parameter. However, in different scenarios, quality of service parameters needed by the source terminal to determine the first hop count are different. For example, in the U2U scenario, that is, in a scenario in which the target terminal is a discoveree terminal rather than a relay terminal that can be connected to a network, the source terminal may determine the first hop count based on the quality of service parameter corresponding to the first service and a quality of service parameter corresponding to a PC5 connection. For another example, in the U2N scenario, that is, in a scenario in which the target terminal is a relay terminal that can be connected to a network, the source terminal may determine the first hop count based on the quality of service parameter corresponding to the first service and a quality of service parameter corresponding to a PC5 connection and/or a quality of service parameter corresponding to a connection between the target terminal and a network device.

In view of this, as shown in FIG. 9, in the U2U scenario in Manner 2, that is, in the scenario in which the target terminal is the discoveree terminal rather than the relay terminal that can be connected to the network, S801A may be replaced with S903.

S903: The source terminal determines the first hop count based on the quality of service parameter corresponding to the first service and a first quality of service parameter.

The first quality of service parameter is the quality of service parameter corresponding to the PC5 connection.

Optionally, the first quality of service parameter may include a quality of service parameter of each hop connection in a multi-hop connection in the PC5 connection.

In an example, it is assumed that the quality of service parameter is a delay, a delay corresponding to the first service is 100 milliseconds, and a delay, indicated by the first quality of service parameter, of each hop connection in the multi-hop connection in the PC5 connection is 30 milliseconds. In this way, the source terminal may round down a ratio of the delay corresponding to the first service to the delay indicated by the first quality of service parameter, to obtain the first hop count (namely, 3).

In another example, it is assumed that the quality of service parameter is a delay, a delay corresponding to the first service is 100 milliseconds, and a delay, indicated by the first quality of service parameter, of each hop connection in the multi-hop connection in the PC5 connection is 25 milliseconds. In this way, the source terminal may round down a ratio of the delay corresponding to the first service to the delay indicated by the first quality of service parameter, to obtain the first hop count (namely, 4).

In another example, it is assumed that the quality of service parameter is a delay, a delay corresponding to the first service is 100 milliseconds, and delays, indicated by the first quality of service parameter, the multi-hop connections in the PC5 connection are 20 milliseconds and 30 milliseconds. In this way, the source terminal determines, based on the delay corresponding to the first service and the delays indicated by the first quality of service parameter, M PC5 connections whose delays are 20 milliseconds and L PC5 connections whose delays are 30 milliseconds, where both M and L are positive integers. In this case, a sum of 20M and 30L is less than or equal to 100 milliseconds, and the first hop count is a sum of M and L.

In another example, it is assumed that the quality of service parameter includes a delay of 100 milliseconds and a packet loss rate less than or equal to 2%, and a delay and a packet loss rate, indicated by the first quality of service parameter, of each hop in the multi-hop connection in the PC5 connection are 30 milliseconds and 1% respectively. In this way, the source terminal may round down a ratio of the delay corresponding to the first service to the delay indicated by the first quality of service parameter, to obtain a hop count (namely, 3) corresponding to the delay, and perform multiple computing on the packet loss rate corresponding to the first service and the packet loss rate indicated by the first quality of service parameter, and then perform rounding down, to obtain a hop count (namely, 2) corresponding to the packet loss rate, and the source terminal may determine a smaller value of the hop count corresponding to the delay and the hop count corresponding to the packet loss rate as the first hop count (namely, 2).

Further, optionally, the hop count corresponding to the packet loss rate may satisfy the following formula 1: $A 1 = lg \left(1-A2\right) / lg \left(1-A3\right) = \left⌊2.01\right⌋$ Formula 1

A1 is the hop count corresponding to the packet loss rate. A2 is the packet loss rate indicated by the first quality of service parameter. A3 is the packet loss rate corresponding to the first service.

Optionally, the first quality of service parameter may further include a quality of service parameter of a single-hop PC5 connection, and the quality of service parameter of the single-hop PC5 connection may be a quality of service parameter of an established single-hop PC5 connection.

In an example, it is assumed that the quality of service parameter is a delay, a delay corresponding to the first service is 100 milliseconds, and the delay, indicated by the first quality of service parameter, of the single-hop PC5 connection is 20 milliseconds. In this way, the source terminal may round down a ratio of the delay corresponding to the first service to the delay indicated by the first quality of service parameter, to obtain the first hop count (namely, 5).

It may be understood that, in the U2U scenario in Manner 2, the source terminal may determine the first hop count based on the quality of service parameter corresponding to the first service and the first quality of service parameter. In this way, accuracy of the first hop count determined based on an actual quality of service parameter is higher, and subsequently, it can be better ensured that service requirements between terminals are met.

As shown in FIG. 9, in the U2N scenario in Manner 2, that is, in the scenario in which the target terminal is the relay terminal that can be connected to the network, S801A may be replaced with S904.

S904: The source terminal determines the first hop count based on the quality of service parameter corresponding to the first service and first information.

The first information includes a first quality of service parameter and/or a second quality of service parameter, the first quality of service parameter is a quality of service parameter corresponding to a PC5 connection, and the second quality of service parameter is a quality of service parameter corresponding to a connection between the target terminal and a network device.

In some examples, the network device may include a RAN node and/or a core network element device. Certainly, the foregoing description is merely an example of the network device in this application. The network device in this application may further include another device. This is not limited in embodiments of this application.

Optionally, when the first information includes the first quality of service parameter or the second quality of service parameter, for an implementation process in which the source terminal determines the first hop count based on the quality of service parameter corresponding to the first service and the first information, refer to the related descriptions of S903. Details are not described herein again.

When the first information includes the first quality of service parameter and the second quality of service parameter, the source terminal may process, based on the second quality of service parameter, the quality of service parameter corresponding to the first service, to obtain a third quality of service parameter, and determine the first hop count based on the third quality of service parameter and the first quality of service parameter. For an implementation process in which the source terminal determines the first hop count based on the third quality of service parameter and the first quality of service parameter, refer to the implementation process in which the source terminal determines the first hop count based on the quality of service parameter corresponding to the first service and the first quality of service parameter for understanding. Details are not described herein again.

When the first information includes the first quality of service parameter and the second quality of service parameter, an example in which the quality of service parameter is a delay is used, and an implementation process in which the source terminal determines the first hop count based on the quality of service parameter corresponding to the first service and the first information may be: The source terminal may determine the third quality of service parameter based on a difference between the quality of service parameter corresponding to the first service and the second quality of service parameter, and round down a ratio of the third quality of service parameter to the first quality of service parameter, to obtain the first hop count.

It should be understood that, for the first quality of service parameter, refer to the foregoing descriptions at corresponding positions for understanding. Details are not described herein again. The second quality of service parameter may be a default quality of service parameter corresponding to an air interface, or the second quality of service parameter may be another quality of service parameter. This is not limited in embodiments of this application.

It may be understood that in the U2N scenario in Manner 2, that is, in the scenario in which the target terminal is the relay terminal that can be connected to the network, connections exist not only between the terminals but also between the terminal and the network. Therefore, in this scenario, in addition to improving the accuracy of the first hop count based on the actual quality of service parameter, the source terminal may further adaptively determine, based on the current scenario, the first quality of service parameter and/or the second quality of service parameter as the quality of service parameter needed for the first hop count, so that the first hop count determined based on the quality of service parameter can better meet an actual situation of the current scenario, thereby further improving the accuracy of the first hop count.

In addition, when the information about the first service includes the quality of service parameter corresponding to the first service and/or the hop count requirement of the first service, an implementation process of determining the first hop count based on the information about the first service inside the source terminal may be: An application layer of the source terminal sends the quality of service parameter corresponding to the first service and/or the hop count requirement of the first service to a proximity service layer ProSe layer of the source terminal, and correspondingly, the ProSe layer of the source terminal receives the quality of service parameter corresponding to the first service and/or the hop count requirement of the first service from the application layer of the source terminal, and determines the first hop count based on the quality of service parameter corresponding to the first service and/or the hop count requirement of the first service.

In other words, when the information about the first service includes the quality of service parameter corresponding to the first service and/or the hop count requirement of the first service, the ProSe layer of the source terminal may obtain the quality of service parameter corresponding to the first service and/or the hop count requirement of the first service from the application layer of the source terminal, and determine the first hop count based on the quality of service parameter corresponding to the first service and/or the hop count requirement of the first service. This provides a specific implementation of determining the first hop count inside the source terminal, and this specific implementation can effectively support implementation of effect implemented in corresponding preceding steps.

It may be understood that, for an implementation process in which the ProSe layer of the source terminal determines the first hop count based on the quality of service parameter corresponding to the first service and/or the hop count requirement of the first service, refer to the related descriptions of Manner 1 and Manner 2. Details are not described herein again.

The foregoing describes the implementation process of determining the first hop count based on the information about the first service inside the source terminal. However, further, optionally, an example in which the information about the first service is the quality of service parameter corresponding to the first service is used. An implementation process of determining the information about the first service inside the source terminal may be: The ProSe layer of the source terminal obtains a quality of service requirement corresponding to the first service from the application layer of the source terminal, and determines, based on the quality of service requirement corresponding to the first service, the quality of service parameter corresponding to the first service. This can provide a data basis for subsequently determining the first hop count.

Optionally, an example in which the information about the first service is the quality of service parameter corresponding to the first service is used. An implementation process of determining the information about the first service inside the source terminal may be: The ProSe layer of the source terminal obtains the type of the first service from the application layer of the source terminal, and determines, based on the type of the first service, the quality of service parameter corresponding to the first service. This can provide a data basis for subsequently determining the first hop count.

Optionally, an example in which the information about the first service is the relay service type corresponding to the first service is used. An implementation process of determining the information about the first service inside the source terminal may be: The ProSe layer of the source terminal determines, based on the type of the first service and policy information configured on the source terminal, the relay service type corresponding to the first service. This can provide a data basis for subsequently determining the first hop count.

Optionally, an example in which the information about the first service is the quality of service parameter corresponding to the first service is used. An implementation process of determining the information about the first service inside the source terminal may be: When the source terminal determines that there is already a PC5 quality of service flow that can match a data packet or a request of the first service from the application layer of the source terminal, the source terminal determines, based on a quality of service parameter corresponding to the existing PC5 quality of service flow, the quality of service parameter corresponding to the first service. This can provide a data basis for subsequently determining the first hop count.

Further, specifically, an implementation process in which the source terminal determines, based on the quality of service parameter corresponding to the existing PC5 quality of service flow, the quality of service parameter corresponding to the first service may be: The source terminal determines the quality of service parameter corresponding to the existing PC5 quality of service flow as the quality of service parameter corresponding to the first service.

In this implementation, optionally, the source terminal may be specifically the ProSe layer of the source terminal. This is not limited in embodiments of this application.

Optionally, an example in which the information about the first service is the quality of service parameter corresponding to the first service is used. An implementation process of determining the information about the first service inside the source terminal may be: When the source terminal determines that there is no PC5 quality of service flow that can match the data packet or the request of the first service from the application layer of the source terminal, the source terminal determines, based on the quality of service requirement corresponding to the first service, the quality of service parameter corresponding to the first service; or the source terminal determines, based on the type of the first service, the quality of service parameter corresponding to the first service. This can provide a data basis for subsequently determining the first hop count.

In this implementation, optionally, the source terminal may alternatively be specifically the ProSe layer of the source terminal. This is not limited in embodiments of this application.

In addition, optionally, Manner 1 and Manner 2 may be combined. This is not limited in embodiments of this application. In a process in which the source terminal determines the first hop count in Manner 1 and/or Manner 2, the source terminal may determine a plurality of first hop counts, where the plurality of first hop counts include the first hop count determined based on the relay service type and the first hop count determined based on the quality of service parameter.

In a possible implementation, in the foregoing case, the source terminal may determine a smallest value of the plurality of first hop counts as the first hop count carried in the first discovery message.

It may be understood that the foregoing implementation is applicable to a scenario in which overhead of the discovery process is reduced. For example, if the first hop count (for example, three hops) determined based on the quality of service parameter is less than the first hop count (for example, five hops) determined based on the relay service type, a path whose hop count is greater than three hops cannot meet a QoS requirement. In other words, overhead of the discovery process is currently reduced. Therefore, the source terminal may determine the first hop count determined based on the quality of service parameter as the first hop count carried in the first discovery message.

Further, in another possible implementation, in the foregoing case, the source terminal may determine a largest value of the plurality of first hop counts as the first hop count carried in the first discovery message.

It may be understood that the foregoing implementation is applicable to wider scenarios in which a maximum hop number is used. For example, if the target terminal is not discovered in the previous discovery process, the source terminal determines the largest value of the plurality of first hop counts as the first hop count carried in the first discovery message.

Optionally, before the source terminal sends the first discovery message, the source terminal may pre-determine whether the first discovery message needs to be sent, so that the source terminal can send the first discovery message in an appropriate case, to avoid redundant signaling overhead. To achieve the foregoing technical effects, an embodiment of this application provides another information transmission method. As shown in FIG. 10, the information transmission method includes the following steps.

S1001: A source terminal determines, based on whether there is a connection between the source terminal and a target terminal and/or second information, that a first discovery message needs to be sent.

The second information includes a hop count for a connection between the source terminal and the target terminal and a first hop count.

It should be noted that, if the connection has not been established between the source terminal and the target terminal, and only a discovery process is completed, the hop count for the connection between the source terminal and the target terminal may be replaced with a hop count for communication between the source terminal and the target terminal.

It should be understood that for the first hop count, refer to the foregoing descriptions at corresponding positions for understanding. Details are not described herein again.

Further, optionally, S1001 may be replaced with step A or step B.

Step A: When there is no connection between the source terminal and the target terminal, the source terminal determines that the first discovery message needs to be sent.

It may be understood that only when the source terminal cannot communicate with the target terminal currently, the source terminal needs to send the first discovery message to discover the target terminal, so that the first discovery message is not repeatedly sent when the source terminal can communicate with the target terminal, thereby avoiding redundant signaling overhead.

Step B: When there is the connection between the source terminal and the target terminal, and the hop count for the connection between the source terminal and the target terminal is greater than the first hop count, the source terminal determines that the first discovery message needs to be sent.

It may be understood that, although there is the connection between the source terminal and the target terminal currently, the connection cannot meet service requirements. This indicates that the source terminal cannot communicate with the target terminal currently. In this case, the source terminal also needs to send the first discovery message to discover the target terminal, so that the first discovery message is not repeatedly sent when the source terminal can communicate with the target terminal, thereby avoiding redundant signaling overhead.

In addition, when there is the connection between the source terminal and the target terminal, and the hop count for the connection between the source terminal and the target terminal is less than or equal to the first hop count, the source terminal may not send the first discovery message, but trigger a connection modification procedure, so that the source terminal can communicate with the target terminal based on an existing connection, thereby avoiding redundant signaling overhead.

It should be noted that the methods shown in FIG. 8 to FIG. 10 are applied to the discovery process in the model B. However, it can be learned from the foregoing related descriptions of the " model B discovery process " that the model B discovery process may further include the model B U2U discovery process and the model B U2N discovery process. The following separately describes information transmission methods applied to the model B U2U discovery process and the model B U2N discovery process.

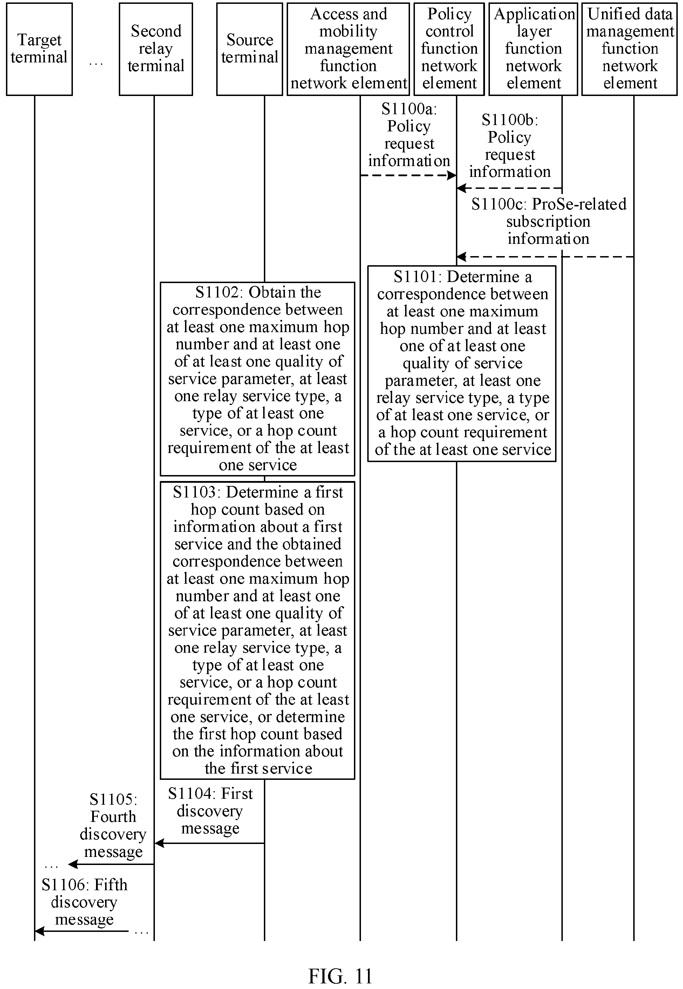

When the method is applied to the model B U2U discovery process, as shown in FIG. 11, the information transmission method includes the following steps.

S1101: A policy control function network element determines a correspondence between at least one maximum hop number and at least one of at least one quality of service parameter, at least one relay service type, a type of at least one service, or a hop count requirement of the at least one service.

Optionally, before S1101, the information transmission method further includes S1100a, S1100b, or S1100c.

S1100a: An access and mobility management function network element sends policy request information to the policy control function network element, and correspondingly, the policy control function network element receives the policy request information from the access and mobility management function network element.

S1100b: An application layer function network element sends policy request information to the policy control function network element, and correspondingly, the policy control function network element receives the policy request information from the application layer function network element.

S1100c: A unified data management function network element sends ProSe-related subscription information to the policy control function network element, and correspondingly, the policy control function network element receives the ProSe-related subscription information of a source terminal from the unified data management function network element.

S1102: The source terminal obtains the correspondence between at least one maximum hop number and at least one of at least one quality of service parameter, at least one relay service type, a type of at least one service, or a hop count requirement of the at least one service.

In a possible implementation, the policy control function network element sends first indication information to the source terminal through the access and mobility management function network element, and correspondingly, the source terminal receives the first indication information from the policy control function network element through the access and mobility management function network element, so that the source terminal obtains the correspondence between at least one maximum hop number and at least one of at least one quality of service parameter, at least one relay service type, a type of at least one service, or a hop count requirement of the at least one service.

In another possible implementation, the source terminal determines to obtain the correspondence between at least one maximum hop number and at least one of at least one quality of service parameter, at least one relay service type, a type of at least one service, or a hop count requirement of the at least one service.

S1103: The source terminal determines a first hop count based on information about a first service and the obtained correspondence between at least one maximum hop number and at least one of at least one quality of service parameter, at least one relay service type, a type of at least one service, or a hop count requirement of the at least one service, or determines the first hop count based on the information about the first service.

S1104: The source terminal sends a first discovery message, and correspondingly, a second relay terminal receives the first discovery message.

Optionally, the source terminal may send, to the second relay terminal, the correspondence between at least one maximum hop number and at least one of at least one quality of service parameter, at least one relay service type, a type of at least one service, or a hop count requirement of the at least one service. In this way, the second relay terminal stores the correspondence between at least one maximum hop number and at least one of at least one quality of service parameter, at least one relay service type, a type of at least one service type, or a hop count requirement of the at least one service.

S1105: The second relay terminal broadcasts a fourth discovery message, and correspondingly, another relay terminal receives the fourth discovery message.

The fourth discovery message includes the first hop count and discovery information.

S1106: The another relay terminal broadcasts a fifth discovery message, and correspondingly, a target terminal receives the fifth discovery message.

The fifth discovery message includes the first hop count and the discovery information.

However, for a process in which the target terminal feeds back a discovery response message to the source terminal through the relay terminal, refer to the foregoing descriptions at corresponding positions for understanding. Details are not described herein again.

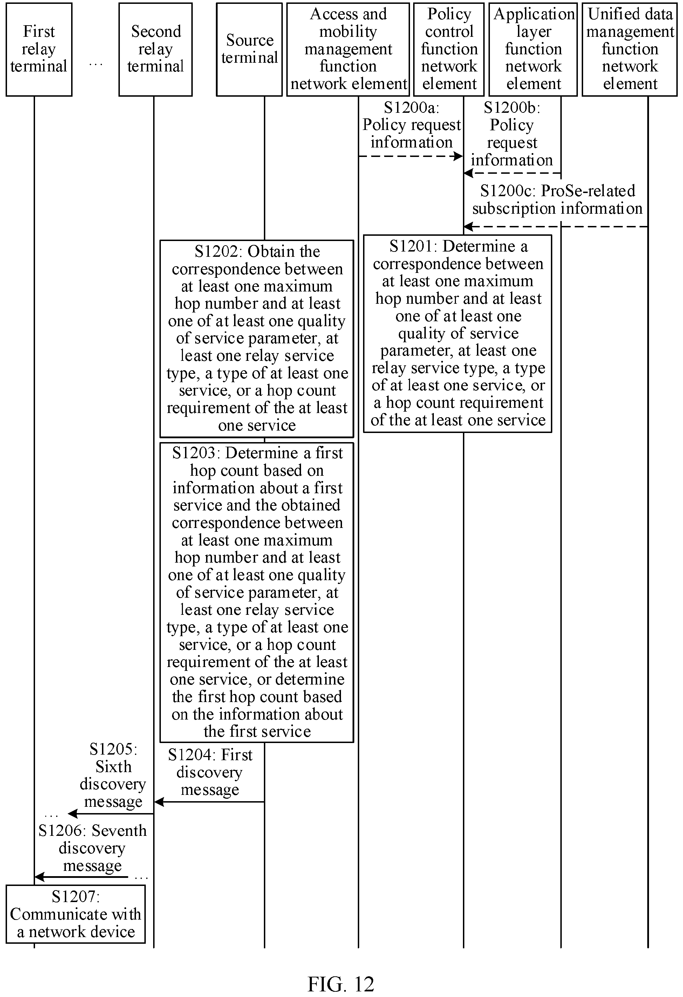

When the method is applied to the model B U2N discovery process, as shown in FIG. 12, the information transmission method includes the following steps.

S1201: A policy control function network element determines a correspondence between at least one maximum hop number and at least one of at least one quality of service parameter, at least one relay service type, a type of at least one service, or a hop count requirement of the at least one service.

Optionally, before S1201, the information transmission method further includes S1200a, S1200b, or S1200c.

S1200a: An access and mobility management function network element sends policy request information to the policy control function network element, and correspondingly, the policy control function network element receives the policy request information from the access and mobility management function network element.

S1200b: An application layer function network element sends policy request information to the policy control function network element, and correspondingly, the policy control function network element receives the policy request information from the application layer function network element.

S1200c: A unified data management function network element sends ProSe-related subscription information to the policy control function network element, and correspondingly, the policy control function network element receives the ProSe-related subscription information of a source terminal from the unified data management function network element.

S1202: The source terminal obtains the correspondence between at least one maximum hop number and at least one of at least one quality of service parameter, at least one relay service type, a type of at least one service, or a hop count requirement of the at least one service.

The source terminal may also be referred to as a remote terminal.

In a possible implementation, the policy control function network element sends first indication information to the source terminal through the access and mobility management function network element, and correspondingly, the source terminal receives the first indication information from the policy control function network element through the access and mobility management function network element, so that the source terminal obtains the correspondence between at least one maximum hop number and at least one of at least one quality of service parameter, at least one relay service type, a type of at least one service, or a hop count requirement of the at least one service.

In another possible implementation, the source terminal determines to obtain the correspondence between at least one maximum hop number and at least one of at least one quality of service parameter, at least one relay service type, a type of at least one service, or a hop count requirement of the at least one service.

S1203: The source terminal determines a first hop count based on information about a first service and the obtained correspondence between at least one maximum hop number and at least one of at least one quality of service parameter, at least one relay service type, a type of at least one service, or a hop count requirement of the at least one service, or determines the first hop count based on the information about the first service.

S1204: The source terminal sends a first discovery message, and correspondingly, a second relay terminal receives the first discovery message.

Optionally, the source terminal may send, to the second relay terminal, the correspondence between at least one maximum hop number and at least one of at least one quality of service parameter, at least one relay service type, a type of at least one service, or a hop count requirement of the at least one service. In this way, the second relay terminal stores the correspondence between at least one maximum hop number and at least one of at least one quality of service parameter, at least one relay service type, a type of at least one service type, or a hop count requirement of the at least one service.

S1205: The second relay terminal broadcasts a sixth discovery message, and correspondingly, another relay terminal that is not connected to a network receives the sixth discovery message.

The sixth discovery message includes the first hop count and discovery information.

S1206: The another relay terminal that is not connected to the network broadcasts a seventh discovery message, and correspondingly, a first relay terminal receives the seventh discovery message.

The seventh discovery message includes the first hop count and the discovery information.

S1207: The first relay terminal communicates with a network device.

However, for a process in which the first relay terminal feeds back a discovery response message to the source terminal through the relay terminal, refer to the foregoing descriptions at corresponding positions for understanding. Details are not described herein again.

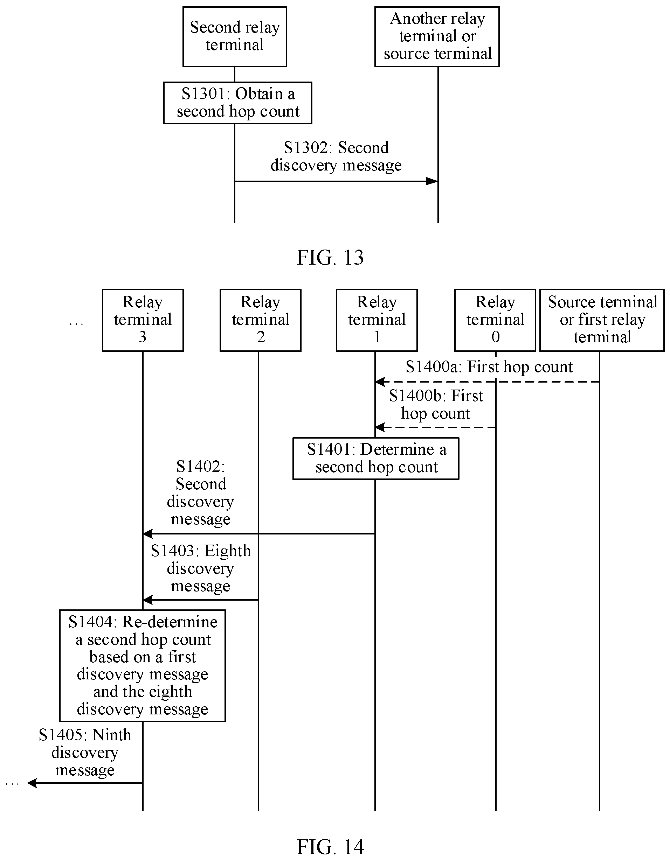

It should be noted that the methods shown in FIG. 8 to FIG. 12 are applied to the model B discovery process. However, it can be learned from the foregoing related descriptions of "relay discovery" that the discovery process may further include the model A discovery process. In view of this, in the model A discovery process, FIG. 13 shows another example of an information transmission method according to an embodiment of this application. The method is described by using a second relay terminal as an execution body, where the second relay terminal is a relay terminal that is not connected to a network. Certainly, an action of the second relay terminal in the method may alternatively be performed by an apparatus/a module in the second relay terminal, for example, a chip, a processor, or a processing unit in the second relay terminal. This is not specifically limited in embodiments of this application. For example, as shown in FIG. 13, the information transmission method includes the following steps.

S1301: The second relay terminal obtains a second hop count.

The second hop count is a maximum hop number for transmitting discovery information after the second relay terminal receives the discovery information. The discovery information is used by a source terminal to discover a target terminal. The second hop count is related to a relay service type corresponding to a first service of the source terminal.

Optionally, the second hop count may alternatively be understood as a remaining maximum hop number for transmitting the discovery information. For example, it is assumed that the second relay terminal is a relay terminal at a second hop. In this case, two hops are needed for transmission of the discovery information between the target terminal and the second relay terminal. If the maximum hop number for transmitting the discovery information is 5, the second hop count is 3. In this way, after the second relay terminal receives the discovery information, the discovery information is transmitted by other relay terminals for a maximum of three hops. This means that at most two relay terminals relaying the discovery information can exist between the second relay terminal and the target terminal.

S1302: The second relay terminal sends a second discovery message, and correspondingly, another relay terminal or the source terminal receives the second discovery message.

The second discovery message includes the second hop count and the discovery information.

Optionally, the second relay terminal may send a plurality of second discovery messages, and one second discovery message may include one piece of discovery information and one second hop count. In this case, the plurality of second discovery messages may be independently carried. For example, a second discovery message 1 is [RSC, second hop count=4, user info ID of {end UE 1}], and a second discovery message 2 is [RSC, second hop count=4, user info ID of {end UE 2}]. In other words, the second discovery message 1 and the second discovery message 2 are independently carried.

However, second discovery messages that include a same second hop count and a same RSC may alternatively be carried in combination, for example, [RSC 1, second hop count=4, user info IDs of {end UE 1, end UE 2, end UE 3}]. In other words, because the second discovery messages corresponding to the end UE 1, the end UE 2, and the end UE 3 include the same second hop count and the same RSC, the second discovery messages corresponding to the end UE 1, the end UE 2, and the end UE 3 can be carried in combination.

However, second discovery messages that include a same second hop count may alternatively be carried in combination, for example, [maximum hop number=4, [RSC={1, 2}, user info IDs of {end UE 1, end UE 2, end UE 3}]]. In other words, because the second discovery messages corresponding to the end UE 1, the end UE 2, and the end UE 3 include the same second hop count, the second discovery messages corresponding to the end UE 1, the end UE 2, and the end UE 3 can be carried in combination.

However, second discovery messages that include a same RSC may alternatively be carried in combination, for example, [RSC 1, {maximum hop number=4, user info ID of end UE 1}, {maximum hop number=3, user info ID of end UE 4}, {maximum hop number=2, user info ID of end UE 5}]. In other words, because the second discovery messages corresponding to the end UE 1, the end UE 4, and the end UE 5 include the same RSC, the second discovery messages corresponding to the end UE 1, the end UE 4, and the end UE 5 can be carried in combination.

In embodiments of this application, the second relay terminal may determine the maximum hop number (namely, the second hop count) for transmitting the discovery information after the second relay terminal receives the discovery information, and send the second discovery message including the second hop count and the discovery information. In this way, when receiving the discovery information, another terminal can learn of the second hop count, so that the second relay terminal can limit, based on the second hop count in a discovery process, a hop count for transmitting the discovery information after the second relay terminal receives the discovery information. Because the relay service type corresponding to the first service included in information about the first service is a parameter related to service requirements, and the second hop count is related to the relay service type corresponding to the first service, the second hop count can better meet an actual requirement of the service, so that it can be ensured as much as possible that service requirements between terminals are met.

Optionally, the second relay terminal may obtain the second hop count in the following two manners:

Manner 3: The second relay terminal directly obtains the second hop count from another terminal.

Manner 4: The second relay terminal determines the second hop count. Certainly, the foregoing description is merely an example of an implementation in which the second relay terminal obtains the second hop count. The second relay terminal may further obtain the second hop count in another manner. This is not limited in embodiments of this application.

The following describes Manner 3 and Manner 4 in detail.

Manner 3: The second relay terminal directly obtains the second hop count from the another terminal. In Manner 3, the another terminal sends fourth indication information to the second relay terminal in a broadcast manner, a unicast manner, or the like, and correspondingly, the second relay terminal receives the fourth indication information, where the fourth indication information indicates the second hop count. In this way, the second relay terminal can directly learn of the second hop count by using the fourth indication information, thereby reducing a calculation burden of determining the second hop count by the second relay terminal.

It should be noted that, in Manner 3, the second hop count in the fourth indication information may be represented by using the hop count indicator recorded in Implementation 2.

Manner 4: The second relay terminal determines the second hop count. In Manner 4, the second relay terminal may obtain a first hop count and a third hop count, and determine the second hop count based on the first hop count and the third hop count. The first hop count is a maximum hop number for transmitting the discovery information, the first hop count is related to the relay service type corresponding to the first service, and the third hop count is a hop count for a connection between the second relay terminal and a target terminal.

In a possible implementation, the second relay terminal may obtain a plurality of third hop counts. In this case, the second relay terminal may determine a smallest value of the plurality of third hop counts as the third hop count needed for calculating the second hop count. For example, a third hop count obtained by the second relay terminal from a relay terminal a is 3, and a third hop count obtained from a relay terminal b is 4. In this way, the second relay terminal may determine that the third hop count needed for calculating the second hop count is 3.

In another possible implementation, the second relay terminal may obtain a plurality of third hop counts. In this case, the second relay terminal may determine a largest value of the plurality of third hop counts as the third hop count needed for calculating the second hop count. For example, a third hop count obtained by the second relay terminal from a relay terminal a is 5, and a third hop count obtained from a relay terminal b is 4. In this way, the second relay terminal may determine that the third hop count needed for calculating the second hop count is 5.

Optionally, the second relay terminal may determine a difference between the first hop count and the third hop count as the second hop count. For example, if the first hop count is 5 and the third hop count is 3, the second hop count is 2. Certainly, the foregoing description is merely an example of determining the second hop count by the second relay terminal. The second relay terminal may further determine the second hop count in another manner. This is not limited in embodiments of this application.

It may be understood that in addition to directly obtaining the second hop count, the second relay terminal may further determine the second hop count based on the entire end-to-end maximum hop number (namely, the first hop count) from the source terminal to the target terminal and the hop count (namely, the third hop count) for the connection between the second relay terminal and the target terminal. In this way, when another terminal cannot provide the second hop count for the second relay terminal, the second relay terminal can also determine the second hop count based on the first hop count and the third hop count. In other words, another implementation of determining the second hop count is provided, so that reliability of determining the second hop count by the second relay terminal is improved.

It should be noted that, in Manner 4, the second hop count in the fourth indication information may be represented by using the hop count indicator recorded in Implementation 1 or the quantity of identifiers of relay terminals recorded in Implementation 3.

Further, optionally, the second relay terminal may obtain the first hop count in the following two manners.

Manner 5: The second relay terminal directly obtains the first hop count from another terminal.

Manner 6: The second relay terminal determines the first hop count. Certainly, the foregoing description is merely an example of an implementation in which the second relay terminal obtains the first hop count. The second relay terminal may further obtain the first hop count in another manner. This is not limited in embodiments of this application.

The following describes Manner 5 and Manner 6 in detail.

Manner 5: The second relay terminal directly obtains the first hop count from the another terminal. In Manner 5, the another terminal sends second indication information to the second relay terminal in a broadcast manner, a unicast manner, or the like, and correspondingly, the second relay terminal receives the second indication information, where the second indication information indicates the first hop count. In this way, the second relay terminal can directly learn of the first hop count by using the second indication information, thereby reducing a calculation burden of determining the first hop count by the second relay terminal.

Optionally, the second relay terminal may obtain the first hop count through the model B discovery process that has been performed, may obtain the first hop count through the model A discovery process that has been performed, or may obtain the first hop count (for example, other indication information including the first hop count) by using another message through another process (for example, an integrated communication and discovery process). This is not limited in embodiments of this application. Certainly, in addition to being applied to the second relay terminal to obtain the first hop count, the foregoing method may be further applied to another relay terminal (for example, a first relay terminal) to obtain another message (for example, the third hop count or an RSC). This is not limited in embodiments of this application.

In addition, optionally, the second relay terminal may further obtain the first hop count by using any message transmitted to the second relay terminal.

Further, optionally, the message transmitted to the second relay terminal may include information about the source terminal or the target terminal, information about a path from the second relay terminal to the source terminal or the target terminal, or the first hop count.

For example, the message transmitted to the second relay terminal may be [RSC 1, {maximum hop number=4, user info ID of end UE 1, path=Relay A, Relay B}, {maximum hop number=3, user info ID of end UE 4, path information=Relay C}, {maximum hop number=2, user info ID of end UE 5, path information=Relay A}].

Certainly, in addition to being applied to the second relay terminal to obtain the first hop count, the foregoing method may be further applied to another relay terminal (for example, a first relay terminal) to obtain another message (for example, the third hop count or an RSC). This is not limited in embodiments of this application.

Manner 6: The second relay terminal determines the first hop count. In Manner 6, the second relay terminal may receive third indication information from a policy control function network element, and determine, based on the third indication information, a maximum hop number corresponding to the relay service type of the first service as the first hop count, where the third indication information indicates a correspondence between at least one maximum hop number and at least one relay service type, and the at least one relay service type includes the relay service type corresponding to the first service. For related descriptions of Manner 6, refer to the related descriptions of Manner 1 for understanding. Details are not described herein again.

It may be understood that the second relay terminal may directly and simply determine the first hop count based on a correspondence between at least one piece of information (for example, the relay service type) related to service requirements and a maximum hop number. This reduces complexity of determining the first hop count by the second relay terminal, and further improves efficiency of determining the first hop count by the second relay terminal.

It should be noted that the method shown in FIG. 13 is applied to the model A discovery process. However, it can be learned from the foregoing related descriptions of the "model A discovery process" that the model A discovery process may further include the model A U2U discovery process and the model A U2N discovery process. The following separately describes information transmission methods applied to the model A U2U discovery process and the model A U2N discovery process.

When the method is applied to the model A, U2U discovery process, an example in which the second relay terminal is a relay terminal 1 is used. As shown in FIG. 14, the information transmission method includes the following steps.

S1401: The relay terminal 1 determines a second hop count.

Specifically, the relay terminal 1 may determine the second hop count based on a first hop count and a third hop count.

Optionally, before S1401, the information transmission method further includes S1400a or S1400b.

S1400a: A source terminal or a first relay terminal sends the first hop count to the relay terminal 1, and correspondingly, the relay terminal 1 receives the first hop count from the source terminal or the first relay terminal. In other words, the relay terminal 1 may obtain the first hop count through the model B discovery process that has been performed.

S1400b: A relay terminal 0 sends the first hop count to the relay terminal 1, and correspondingly, the relay terminal 1 receives the first hop count from another relay terminal. In other words, the relay terminal 1 may obtain the first hop count through the model A discovery process that has been performed.

S1402: The relay terminal 1 sends a second discovery message, and correspondingly, a relay terminal 3 receives the second discovery message.

S1403: A relay terminal 2 sends an eighth discovery message, and correspondingly, the relay terminal 3 receives the eighth discovery message.

The eighth discovery message includes the second hop count and discovery information.

S1404: The relay terminal 3 re-determines a second hop count based on a first discovery message and the eighth discovery message.

S1405: The relay terminal 3 sends a ninth discovery message, and correspondingly, another relay terminal receives the ninth discovery message.

The ninth discovery message includes the re-determined second hop count and discovery information.

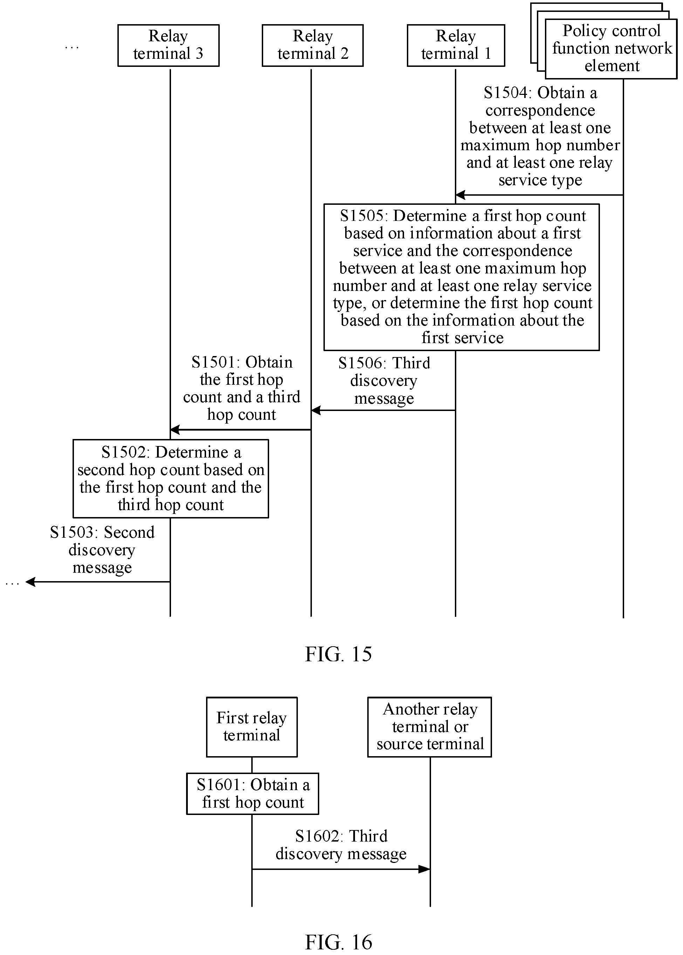

When the method is applied to the model A U2N discovery process, an example in which the second relay terminal is a relay terminal 3 is used. As shown in FIG. 15, the information transmission method includes the following steps.

S1501: The relay terminal 3 obtains a first hop count and a third hop count.

Optionally, S1501 may be: A relay terminal 2 sends a tenth discovery message, and correspondingly, the relay terminal 3 receives the tenth discovery message.

The tenth discovery message includes the first hop count and discovery information.

S1502: The relay terminal 3 determines a second hop count based on the first hop count and the third hop count.

S1503: The relay terminal 3 sends a second discovery message, and correspondingly, another relay terminal receives the second discovery message.

It should be noted that, although the methods shown in FIG. 13 to FIG. 15 are applied to the model A discovery process, the methods are applicable to only a case in which an execution body is a relay terminal that is not connected to a network. Therefore, in the model A discovery process, FIG. 16 shows another example of an information transmission method according to an embodiment of this application. The method is described by using a first relay terminal as an execution body, where the first relay terminal is a relay terminal connected to a network. Certainly, an action of the first relay terminal in the method may alternatively be performed by an apparatus/a module in the first relay terminal, for example, a chip, a processor, or a processing unit in the first relay terminal. This is not specifically limited in embodiments of this application. For example, as shown in FIG. 16, the information transmission method includes the following steps.

S1601: The first relay terminal obtains a first hop count.

The first hop count is a maximum hop number for transmitting discovery information, the discovery information is used by a source terminal to discover the first relay terminal, and the first hop count is related to a relay service type corresponding to a first service of the source terminal.

S1602: The first relay terminal sends a third discovery message, and correspondingly, another relay terminal or the source terminal receives the third discovery message.

The third discovery message includes the first hop count and the discovery information.

In embodiments of this application, the first relay terminal may determine the maximum hop number (namely, the first hop count) for transmitting the discovery information, and send the third discovery message including the first hop count and the discovery information. In this way, another terminal can learn of the first hop count when receiving the discovery information, so that the first relay terminal can limit, based on the first hop count in a discovery process, a hop count for transmitting the discovery information. Because the first hop count is related to the relay service type corresponding to the first service, the first hop count can better meet an actual requirement of the service, so that it can be ensured as much as possible that service requirements between terminals are met.

It may be understood that, for related descriptions of S1601 and S1602, refer to the related descriptions of S801 and S802 for understanding. Details are not described herein again.

Optionally, the first relay terminal may further obtain the first hop count in the following manner, that is, the first relay terminal determines the first hop count based on a parameter related to a quality of service parameter. Specifically, an implementation process of this manner may be: The first relay terminal receives third indication information from a policy control function network element, and determines, based on the third indication information, a maximum hop number corresponding to the relay service type corresponding to the first service as the first hop count. The third indication information indicates a correspondence between at least one maximum hop number and at least one relay service type, and the at least one relay service type includes the relay service type corresponding to the first service.

It may be understood that, for an implementation process in which the first relay terminal obtains the first hop count, refer to the foregoing descriptions at corresponding positions for understanding. Details are not described herein again.

It may be understood that the first relay terminal may directly and simply determine the first hop count based on a correspondence between at least one piece of information (for example, the relay service type) related to service requirements and a maximum hop number. This reduces complexity of determining the first hop count by the first relay terminal, and further improves efficiency of determining the first hop count by the first relay terminal.

In addition, it should be noted that the foregoing description is merely an example of an implementation in which the first relay terminal obtains the first hop count. The first terminal may further obtain the first hop count in another manner. For details, refer to the foregoing descriptions at corresponding positions. Details are not described herein again.

It should be noted that the method shown in FIG. 16 is applied to the model A U2N discovery process. The following separately describes an information transmission method applied to the model A U2N discovery process.

When the method is applied to the model A U2N discovery process, an example in which the first relay terminal is a relay terminal 1 in FIG. 15 is used. As shown in FIG. 15, the information transmission method includes the following steps.

S1504: The relay terminal 1 obtains a correspondence between at least one maximum hop number and at least one relay service type.

Optionally, an implementation process of S1504 may be: The relay terminal 1 may obtain the correspondence between at least one maximum hop number and at least one relay service type from at least one policy control function network element.

S1505: The relay terminal 1 determines the first hop count based on information about the first service and the correspondence between at least one maximum hop number and at least one relay service type, or determines the first hop count based on the information about the first service.

S1506: The relay terminal 1 sends a third discovery message, and correspondingly, a relay terminal 2 receives the third discovery message.

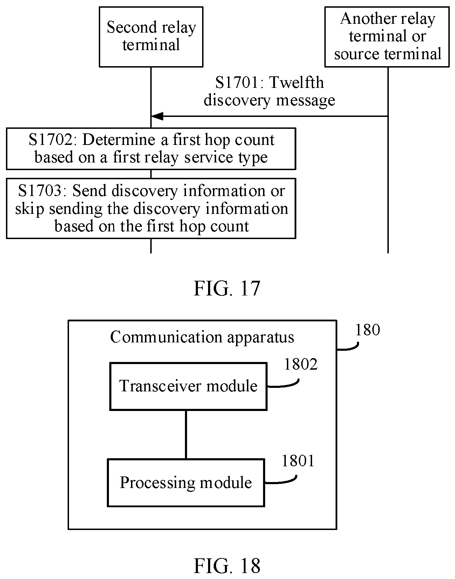

FIG. 17 shows another example of an information transmission method according to an embodiment of this application. The method is described by using a second relay terminal as an execution body. Certainly, an action of the second relay terminal in the method may alternatively be performed by an apparatus/a module in the second relay terminal, for example, a chip, a processor, or a processing unit in the second relay terminal. This is not specifically limited in embodiments of this application. For example, as shown in FIG. 17, the information transmission method includes the following steps.

S1701: The second relay terminal receives a twelfth discovery message.

The twelfth discovery message includes discovery information and a first relay service type, and the discovery information is used by a source terminal to discover a target terminal.

Optionally, the twelfth discovery message may be sent by the source terminal, or may be sent by another relay terminal other than the second relay terminal. This is not limited in embodiments of this application.

For example, the first relay service type may be a relay service type corresponding to a first service. Certainly, the foregoing description is merely an example of the first relay service type. The first relay service type may alternatively be another relay service type. This is not limited in embodiments of this application.

It may be understood that for the discovery information and the relay service type, refer to the related descriptions at corresponding positions for understanding. Details are not described herein again.

S1702: The second relay terminal determines a first hop count based on the first relay service type.

The first hop count is a maximum hop number for transmitting the discovery information.

It may be understood that for S1702, refer to the related descriptions of Manner 6 for understanding. Details are not described herein again.

S1703: The second relay terminal sends the discovery information or does not send the discovery information based on the first hop count.

Optionally, an implementation process of S1703 may be: When a current hop count for transmitting the discovery information reaches the first hop count, the second relay terminal may not send the discovery information. When the current hop count for transmitting the discovery information does not reach the first hop count, the second relay terminal may send the discovery information.

In embodiments of this application, the second relay terminal may determine, based on the first relay service type included in the discovery message, the maximum hop number (namely, the first hop count) for transmitting the discovery information, and send the discovery information or skip sending the discovery information based on the first hop count. Because the first hop count is related to a relay service type corresponding to a first service of the source terminal, the first hop count can better meet an actual requirement of the service. In this way, reasonableness of a hop count for transmitting the discovery information can be ensured as much as possible, that is, redundant transmission of the discovery information or missing transmission of the discovery information is avoided as much as possible.

Further, optionally, when the second relay terminal determines to send the discovery information, the second relay terminal may further send the first hop count. The first hop count and the discovery information may be carried in a same message (for example, a fifth discovery message, where the fifth discovery message includes the first hop count and the discovery information), or the first hop count and the discovery information may be carried in different messages. This is not limited in embodiments of this application.

The following describes in detail an implementation process of S1702.

Optionally, a policy control function network element sends a correspondence between at least one maximum hop number and at least one relay service type to the second relay terminal, and correspondingly, the second relay terminal may receive the correspondence between at least one maximum hop number and at least one relay service type from the policy control function network element, where the at least one relay service type includes the first relay service type.

In this case, an implementation process of S1702 may be: The second relay terminal may determine the first hop count based on the correspondence and the first relay service type. For related descriptions of S1702, refer to the related descriptions of Manner 6 for understanding. Details are not described herein again.

It may be understood that the method shown in FIG. 17 is applicable to a case in which the second relay terminal cannot obtain the first hop count from another discovery message. In other words, if a discovery message sent by the source terminal or the another relay terminal does not include the first hop count, the second relay terminal may determine the first hop count by using the foregoing method.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the source terminal in the foregoing method embodiments, an apparatus including the source terminal, or a component that may be used in the source terminal. Alternatively, the communication apparatus may be the first relay terminal in the foregoing method embodiments, an apparatus including the first relay terminal, or a component that may be used in the first relay terminal. Alternatively, the communication apparatus may be the second relay terminal in the foregoing method embodiments, an apparatus including the second relay terminal, or a component that may be used in the second relay terminal. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into the modules in embodiments of this application is an example, and is logical function division. In actual implementation, there may be another division manner.

For example, the communication apparatus is the terminal in the foregoing method embodiments. FIG. 18 is a diagram of a structure of a communication apparatus 180. The communication apparatus 180 includes a processing module 1801 and a transceiver module 1802. The transceiver module 1802 may also be referred to as a transceiver unit, and is configured to implement a transceiver function. For example, the transceiver module 1802 may be a transceiver circuit, a transceiver machine, a transceiver, or a communication interface.

When the communication apparatus 180 shown in FIG. 18 is the source terminal in the foregoing embodiments,
in a possible implementation, the processing module 1801 is configured to determine a first hop count based on information about a first service, where the first hop count is a maximum hop number for transmitting discovery information, the discovery information is used by the source terminal to discover a target terminal, and information about the first service includes at least one of the following: a quality of service parameter corresponding to the first service, a relay service type corresponding to the first service, a type of the first service, or a hop count requirement of the first service; and the transceiver module 1802 is configured to send a first discovery message, where the first discovery message includes the first hop count and the discovery information.

In some embodiments, the processing module 1801 is further configured to determine the first hop count based on the quality of service parameter corresponding to the first service.

In some embodiments, the processing module 1801 is further configured to generate the first discovery message when the first hop count is different from a maximum hop number determined based on the relay service type corresponding to the first service, and the transceiver module 1802 is further configured to send the first discovery message.

In some embodiments, the processing module 1801 is further configured to generate an eleventh discovery message when the first hop count is the same as the maximum hop number determined based on the relay service type corresponding to the first service, and the transceiver module 1802 is further configured to send the eleventh discovery message, where the eleventh discovery message includes the discovery information, and the eleventh discovery message does not include the first hop count.

In some embodiments, the processing module 1801 is further configured to determine the first hop count based on the information about the first service.

In some embodiments, the transceiver module 1802 is further configured to receive first indication information from a policy control function network element, where the first indication information indicates a correspondence between at least one maximum hop number and at least one of at least one quality of service parameter, at least one relay service type, a type of at least one service, or a hop count requirement of the at least one service; and the at least one quality of service parameter includes the quality of service parameter corresponding to the first service, the at least one relay service type includes the relay service type corresponding to the first service, the type of the at least one service includes the type of the first service, and the hop count requirement of the at least one service includes the hop count requirement of the first service. The processing module 1801 is further configured to determine, based on the first indication information, a maximum hop number corresponding to the information about the first service as the first hop count.

In some embodiments, the processing module 1801 is further configured to determine the first hop count based on the quality of service parameter corresponding to the first service and a first quality of service parameter, where the first quality of service parameter is a quality of service parameter corresponding to a proximity communication PC5 connection.

In some embodiments, the target terminal is a relay terminal connected to a network, and the processing module 1801 is further configured to determine the first hop count based on the quality of service parameter corresponding to the first service and first information, where the first information includes a first quality of service parameter and/or a second quality of service parameter, the first quality of service parameter is a quality of service parameter corresponding to a proximity communication PC5 connection, and the second quality of service parameter is a quality of service parameter corresponding to a connection between the target terminal and a network device.

In some embodiments, the information about the first service includes the quality of service parameter corresponding to the first service and/or the hop count requirement of the first service. The transceiver module 1802 is further configured to receive the quality of service parameter corresponding to the first service and/or the hop count requirement of the first service from an application layer of the source terminal. The processing module 1801 is further configured to determine the first hop count based on the quality of service parameter corresponding to the first service and/or the hop count requirement of the first service.

In some embodiments, the processing module 1801 is further configured to determine, based on whether there is a connection between the source terminal and the target terminal and/or second information, that the first discovery message needs to be sent, where the second information includes a hop count for a connection between the source terminal and the target terminal and the first hop count.

In some embodiments, when there is no connection between the source terminal and the target terminal, the processing module 1801 is further configured to determine that the first discovery message needs to be sent; or when there is the connection between the source terminal and the target terminal, and the hop count for the connection between the source terminal and the target terminal is greater than the first hop count, the processing module 1801 is further configured to determine that the first discovery message needs to be sent.

All related content of the steps in the foregoing method embodiments may be cited in function descriptions of the corresponding functional modules. Details are not described herein again.

In this embodiment of this application, the source terminal is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the source terminal may be in a form of the communication apparatus 700 shown in FIG. 7.

For example, the processor 701 in the communication apparatus 700 shown in FIG. 7 may invoke the computer-executable instructions stored in the memory 703, so that the communication apparatus 700 performs the information transmission method in the foregoing method embodiments.

Specifically, functions/implementation processes of the transceiver module 1802 and the processing module 1801 in FIG. 18 may be implemented by the processor 701 in the communication apparatus 700 shown in FIG. 7 by invoking the computer-executable instructions stored in the memory 703. Alternatively, a function/an implementation process of the processing module 1801 in FIG. 18 may be implemented by the processor 701 in the communication apparatus 700 shown in FIG. 7 by invoking the computer-executable instructions stored in the memory 703, and a function/an implementation process of the transceiver module 1802 in FIG. 18 may be implemented by the communication interface 704 in the communication apparatus 700 shown in FIG. 7.

The source terminal 180 provided in this embodiment of this application may perform the foregoing information transmission method. Therefore, for technical effects that can be achieved by the source terminal, refer to the foregoing method embodiments. Details are not described herein again.

When the communication apparatus 180 shown in FIG. 18 is the second relay terminal in the foregoing embodiments,
in a possible implementation, the processing module 1801 is configured to indicate the transceiver module 1802 to obtain a second hop count, where the second hop count is a maximum hop number for transmitting discovery information after the second relay terminal receives the discovery information, the discovery information is used by a source terminal to discover a target terminal, and the second hop count is related to a relay service type corresponding to a first service of the source terminal. The processing module 1801 is further configured to indicate the transceiver module 1802 to send a second discovery message, where the second discovery message includes the second hop count and the discovery information.

In some embodiments, the processing module 1801 is further configured to indicate the transceiver module 1802 to obtain a first hop count and a third hop count, where the first hop count is a maximum hop number for transmitting the discovery information, the first hop count is related to the relay service type corresponding to the first service, and the third hop count is a hop count for a connection between the second relay terminal and the target terminal. The processing module 1801 is further configured to determine the second hop count based on the first hop count and the third hop count.

In some embodiments, the processing module 1801 is further configured to indicate the transceiver module 1802 to receive second indication information, where the second indication information indicates the first hop count.

In some embodiments, the processing module 1801 is further configured to indicate the transceiver module 1802 to receive third indication information from a policy control function network element, where the third indication information indicates a correspondence between at least one maximum hop number and at least one relay service type, and the at least one relay service type includes the relay service type corresponding to the first service. The processing module 1801 is further configured to indicate to determine, based on the third indication information, a maximum hop number corresponding to the relay service type of the first service as the first hop count.

All related content of the steps in the foregoing method embodiments may be cited in function descriptions of the corresponding functional modules. Details are not described herein again.

In this embodiment of this application, the second relay terminal is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the second relay terminal may be in a form of the communication apparatus 700 shown in FIG. 7.

For example, the processor 701 in the communication apparatus 700 shown in FIG. 7 may invoke the computer-executable instructions stored in the memory 703, so that the communication apparatus 700 performs the information transmission method in the foregoing method embodiments.

Specifically, functions/implementation processes of the transceiver module 1802 and the processing module 1801 in FIG. 18 may be implemented by the processor 701 in the communication apparatus 700 shown in FIG. 7 by invoking the computer-executable instructions stored in the memory 703. Alternatively, a function/an implementation process of the processing module 1801 in FIG. 18 may be implemented by the processor 701 in the communication apparatus 700 shown in FIG. 7 by invoking the computer-executable instructions stored in the memory 703, and a function/an implementation process of the transceiver module 1802 in FIG. 18 may be implemented by the communication interface 704 in the communication apparatus 700 shown in FIG. 7.

The second relay terminal 180 provided in this embodiment of this application may perform the foregoing information transmission method. Therefore, for technical effects that can be achieved by the second relay terminal, refer to the foregoing method embodiments. Details are not described herein again.

When the communication apparatus 180 shown in FIG. 18 is the first relay terminal in the foregoing embodiments,
in a possible implementation, the processing module 1801 is configured to indicate the transceiver module 1802 to obtain a first hop count, where the first hop count is a maximum hop number for transmitting discovery information, the discovery information is used by a source terminal to discover the first relay terminal, and the first hop count is related to a relay service type corresponding to a first service of the source terminal. The processing module 1801 is further configured to indicate the transceiver module 1802 to send a third discovery message, where the third discovery message includes the first hop count and the discovery information.

In some embodiments, the processing module 1801 is further configured to indicate the transceiver module 1802 to receive third indication information from a policy control function network element, where the third indication information indicates a correspondence between at least one maximum hop number and at least one relay service type, and the at least one relay service type includes the relay service type corresponding to the first service. The processing module 1801 is further configured to determine, based on the third indication information, a maximum hop number corresponding to the relay service type corresponding to the first service as the first hop count.

All related content of the steps in the foregoing method embodiments may be cited in function descriptions of the corresponding functional modules. Details are not described herein again.

In this embodiment of this application, the first relay terminal is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the first relay terminal may be in a form of the communication apparatus 700 shown in FIG. 7.

For example, the processor 701 in the communication apparatus 700 shown in FIG. 7 may invoke the computer-executable instructions stored in the memory 703, so that the communication apparatus 700 performs the information transmission method in the foregoing method embodiments.

Specifically, functions/implementation processes of the transceiver module 1802 and the processing module 1801 in FIG. 18 may be implemented by the processor 701 in the communication apparatus 700 shown in FIG. 7 by invoking the computer-executable instructions stored in the memory 703. Alternatively, a function/an implementation process of the processing module 1801 in FIG. 18 may be implemented by the processor 701 in the communication apparatus 700 shown in FIG. 7 by invoking the computer-executable instructions stored in the memory 703, and a function/an implementation process of the transceiver module 1802 in FIG. 18 may be implemented by the communication interface 704 in the communication apparatus 700 shown in FIG. 7.

The first relay terminal 180 provided in this embodiment of this application may perform the foregoing information transmission method. Therefore, for technical effects that can be achieved by the second relay terminal, refer to the foregoing method embodiments. Details are not described herein again.

When the communication apparatus 180 shown in FIG. 18 is the second relay terminal in the foregoing embodiments,
in a possible implementation, the transceiver module 1802 is configured to receive a twelfth discovery message, where the twelfth discovery message includes discovery information and a first relay service type, and the discovery information is used by a source terminal to discover a target terminal. The processing module 1801 is configured to determine a first hop count based on the first relay service type, where the first hop count is a maximum hop number for transmitting the discovery information. The processing module 1801 is further configured to send the discovery information or skip sending the discovery information based on the first hop count.

In some embodiments, the transceiver module 1802 is further configured to receive a correspondence between at least one maximum hop number and at least one relay service type from a policy control function network element, where the at least one relay service type includes the first relay service type. The processing module 1801 is further configured to determine the first hop count based on the correspondence and the first relay service type.

It should be understood that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built into a SoC (system-on-chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

In a possible implementation, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is the chip system, the communication apparatus may include a chip, or may include the chip and another discrete component. This is not specifically limited in embodiments of this application.

In a possible implementation, an embodiment of this application further provides a computer-readable storage medium. The computer-readable storage medium stores a computer program or instructions. When the computer program or the instructions are run on a communication apparatus, the communication apparatus is caused to perform the method in any one of the foregoing method embodiments or the implementations of the foregoing method embodiments.

In a possible implementation, an embodiment of this application further provides an information transmission method. The information transmission method includes the method in any one of the foregoing method embodiments or the implementations of the foregoing method embodiments.

In a possible implementation, an embodiment of this application further provides a communication system. The communication system includes the source terminal in the foregoing method embodiments, the first relay terminal in the foregoing method embodiments, and the second relay terminal in the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An information transmission method, applied to a source terminal, wherein the method comprises:
determining a first hop count based on information about a first service, wherein the first hop count is a maximum hop number for transmitting discovery information, the discovery information is used by the source terminal to discover a target terminal, and the information about the first service comprises at least one of the following: a quality of service parameter corresponding to the first service, a relay service type corresponding to the first service, a type of the first service, or a hop count requirement of the first service; and
sending a first discovery message, wherein the first discovery message comprises the first hop count and the discovery information.

2. The method according to claim 1, wherein the determining the first hop count based on the information about the first service comprises:
determining the first hop count based on the quality of service parameter corresponding to the first service.

3. The method according to claim 2, wherein the sending the first discovery message comprises:
when the first hop count is different from a maximum hop number determined based on the relay service type corresponding to the first service, generating and sending the first discovery message.

4. The method according to claim 3, wherein the method further comprises:
when the first hop count is the same as the maximum hop number determined based on the relay service type corresponding to the first service, generating and sending an eleventh discovery message, wherein the eleventh discovery message comprises the discovery information, and the eleventh discovery message does not comprise the first hop count.

5. The method according to any one of claims 1 to 4, wherein the method further comprises:
receiving first indication information from a policy control function network element, wherein the first indication information indicates a correspondence between at least one maximum hop number and at least one of at least one quality of service parameter, at least one relay service type, a type of at least one service, or a hop count requirement of the at least one service; and the at least one quality of service parameter comprises the quality of service parameter corresponding to the first service, the at least one relay service type comprises the relay service type corresponding to the first service, the type of the at least one service comprises the type of the first service, and the hop count requirement of the at least one service comprises the hop count requirement of the first service; and
the determining the first hop count based on the information about the first service comprises:
determining, based on the first indication information, a maximum hop number corresponding to the information about the first service as the first hop count.

6. The method according to claim 5, wherein the determining the first hop count based on the information about the first service comprises:
determining the first hop count based on the quality of service parameter corresponding to the first service and a first quality of service parameter, wherein the first quality of service parameter is a quality of service parameter corresponding to a proximity communication PC5 connection.

7. The method according to any one of claims 1 to 4, wherein the target terminal is a relay terminal connected to a network, and the determining the first hop count based on the information about the first service comprises:
determining the first hop count based on the quality of service parameter corresponding to the first service and first information, wherein the first information comprises a first quality of service parameter and/or a second quality of service parameter, the first quality of service parameter is a quality of service parameter corresponding to a proximity communication PC5 connection, and the second quality of service parameter is a quality of service parameter corresponding to a connection between the target terminal and a network device.

8. The method according to any one of claims 1 to 4, wherein the information about the first service comprises the quality of service parameter corresponding to the first service and/or the hop count requirement of the first service, and the determining the first hop count based on the information about the first service comprises:
receiving, by a proximity service layer ProSe layer of the source terminal, the quality of service parameter corresponding to the first service and/or the hop count requirement of the first service from an application layer of the source terminal; and
determining, by the ProSe layer of the source terminal, the first hop count based on the quality of service parameter corresponding to the first service and/or the hop count requirement of the first service.

9. The method according to any one of claims 1 to 8, wherein before the sending the first discovery message, the method further comprises:
determining, based on whether there is a connection between the source terminal and the target terminal and/or second information, that the first discovery message is to be sent, wherein the second information comprises a hop count for the connection between the source terminal and the target terminal and the first hop count.

10. The method according to claim 9, wherein the determining, based on whether there is the connection between the source terminal and the target terminal and/or the second information, that the first discovery message is to be sent comprises:
when there is no connection between the source terminal and the target terminal, determining that the first discovery message is to be sent; or
when there is the connection between the source terminal and the target terminal, and the hop count for the connection between the source terminal and the target terminal is greater than the first hop count, determining that the first discovery message is to be sent.

11. An information transmission method, applied to a second relay terminal, wherein the second relay terminal is a relay terminal that is not connected to a network, and the method comprises:
obtaining a second hop count, wherein the second hop count is a maximum hop number for transmitting discovery information after the second relay terminal receives the discovery information, the discovery information is used by a source terminal to discover a target terminal, and the second hop count is related to a relay service type corresponding to a first service of the source terminal; and
sending a second discovery message, wherein the second discovery message comprises the second hop count and the discovery information.

12. The method according to claim 11, wherein the obtaining the second hop count comprises:
obtaining a first hop count and a third hop count, wherein the first hop count is a maximum hop number for transmitting the discovery information, the first hop count is related to the relay service type corresponding to the first service, and the third hop count is a hop count for a connection between the second relay terminal and the target terminal; and
determining the second hop count based on the first hop count and the third hop count.

13. The method according to claim 12, wherein the obtaining the first hop count comprises:
receiving second indication information, wherein the second indication information indicates the first hop count.

14. The method according to claim 12, wherein the method further comprises:
receiving third indication information from a policy control function network element, wherein the third indication information indicates a correspondence between at least one maximum hop number and at least one relay service type, and the at least one relay service type comprises the relay service type corresponding to the first service; and
the obtaining the first hop count comprises:
determining, based on the third indication information, a maximum hop number corresponding to the relay service type of the first service as the first hop count.

15. An information transmission method, applied to a first relay terminal, wherein the first relay terminal is a relay terminal connected to a network, and the method comprises:
obtaining a first hop count, wherein the first hop count is a maximum hop number for transmitting discovery information, the discovery information is used by a source terminal to discover the first relay terminal, and the first hop count is related to a relay service type corresponding to a first service of the source terminal; and
sending a third discovery message, wherein the third discovery message comprises the first hop count and the discovery information.

16. The method according to claim 15, wherein the method further comprises:
receiving third indication information from a policy control function network element, wherein the third indication information indicates a correspondence between at least one maximum hop number and at least one relay service type, and the at least one relay service type comprises the relay service type corresponding to the first service; and
the obtaining the first hop count comprises:
determining, based on the third indication information, a maximum hop number corresponding to the relay service type corresponding to the first service as the first hop count.

17. An information transmission method, applied to a second relay terminal, wherein the second relay terminal is a relay terminal that is not connected to a network, and the method comprises:
receiving a twelfth discovery message, wherein the twelfth discovery message comprises discovery information and a first relay service type, and the discovery information is used by a source terminal to discover a target terminal;
determining a first hop count based on the first relay service type, wherein the first hop count is a maximum hop number for transmitting the discovery information; and
sending the discovery information or skipping sending the discovery information based on the first hop count.

18. The method according to claim 17, wherein the method further comprises:
receiving a correspondence between at least one maximum hop number and at least one relay service type from a policy control function network element, wherein the at least one relay service type comprises the first relay service type; and
the determining the first hop count based on the first relay service type comprises:
determining the first hop count based on the correspondence and the first relay service type.

19. A communication apparatus, comprising a functional unit configured to perform the method according to any one of claims 1 to 10, a functional unit configured to perform the method according to any one of claims 11 to 14, a functional unit configured to perform the method according to claim 15 or claim 16, or a functional unit configured to perform the method according to claim 17 or claim 18, wherein an action performed by the functional unit is implemented by hardware or implemented by hardware executing corresponding software.

20. A communication apparatus, wherein the communication apparatus comprises a processor, the processor is configured to run a computer program or instructions, or is configured to: by using a logic circuit, cause the communication apparatus to perform the method according to any one of claims 1 to 10, cause the communication apparatus to perform the method according to any one of claims 11 to 14, cause the communication apparatus to perform the method according to claim 15 or claim 16, or cause the communication apparatus to perform the method according to claim 17 or claim 18.

21. A computer-readable storage medium, wherein the computer-readable storage medium stores computer instructions or a program, and when the computer instructions or the program is run on a computer, a communication apparatus is caused to perform the method according to any one of claims 1 to 10, the communication apparatus is caused to perform the method according to any one of claims 11 to 14, the communication apparatus is caused to perform the method according to claim 15 or claim 16, or the communication apparatus is caused to perform the method according to claim 17 or claim 18.

22. A communication system, comprising a communication apparatus configured to perform the method according to any one of claims 1 to 10, a communication apparatus configured to perform the method according to any one of claims 11 to 14, a communication apparatus configured to perform the method according to claim 15 or claim 16, and a communication apparatus configured to perform the method according to claim 17 or claim 18.
